(19) Europäisches Patentamt / European Patent Office / Office européen des brevets

(11) **EP 4 240 008 A1**

(12) **EUROPEAN PATENT APPLICATION**
published in accordance with Art. 153(4) EPC

(43) Date of publication:
**06.09.2023 Bulletin 2023/36**

(21) Application number: **21886343.9**

(22) Date of filing: **28.10.2021**

(51) International Patent Classification (IPC):
**H04N 5/64** (2006.01)          **G02B 27/02** (2006.01)

(52) Cooperative Patent Classification (CPC):
**G02B 27/02; H04N 5/64**

(86) International application number:
**PCT/JP2021/039881**

(87) International publication number:
**WO 2022/092226 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.10.2020   JP 2020183225**

(71) Applicant: **Panasonic Intellectual Property
Management Co., Ltd.
Osaka-shi, Osaka 540-6207 (JP)**

(72) Inventors:
• **OGAWA, Suguru
  Chuo-ku, Osaka-shi, Osaka 540-6207 (JP)**
• **KOZUKA, Masayuki
  Chuo-ku, Osaka-shi, Osaka 540-6207 (JP)**

• **KASHIWAGI, Yoshiichiro
  Chuo-ku, Osaka-shi, Osaka 540-6207 (JP)**
• **SERIZAWA, Makoto
  Chuo-ku, Osaka-shi, Osaka 540-6207 (JP)**
• **SUZUKI, Junya
  Chuo-ku, Osaka-shi, Osaka 540-6207 (JP)**
• **MAKINO, Hiroyasu
  Chuo-ku, Osaka-shi, Osaka 540-6207 (JP)**
• **NISHIO, Toshiro
  Chuo-ku, Osaka-shi, Osaka 540-6207 (JP)**
• **YAMAMOTO, Yasutoshi
  Chuo-ku, Osaka-shi, Osaka 540-6207 (JP)**
• **NAKAHASHI, Kota
  Chuo-ku, Osaka-shi, Osaka 540-6207 (JP)**
• **MORI, Yoshihiro
  Kusatsu-shi, Shiga 525-0031 (JP)**

(74) Representative: **Novagraaf International SA
Chemin de l'Echo 3
1213 Onex, Geneva (CH)**

(54)   **DISPLAY DEVICE**

(57)     A display apparatus (HMD (100)) includes: a first lens barrel (10) in a bottomed barrel shape and including, at the bottom, a first display that displays an image; a second lens barrel (20) in a bottomed barrel shape and including, at the bottom, a second display that displays another image; a support member (41) elongated in an arrangement direction of the first and second lens barrels (10 and 20), and supporting, by passing through the first and second lens barrels (10 and 20) in the arrangement direction, at least one of the first and second lens barrels (10 and 20) to allow the at least one lens barrel to move in the arrangement direction; and temple parts respectively connected to two ends of the support member (41) in the arrangement direction. The first lens barrel (10) includes first and second sound pickup devices, the second lens barrel (20) includes third and fourth sound pickup devices, and the temple parts respectively include fifth and sixth sound pickup devices.

FIG. 3A

EP 4 240 008 A1

## Description

[Technical Field]

The present disclosure relates to a display apparatus.

[Background Art]

Recent years have seen active developments of head mounted display devices, what is called a head mounted display. For example, Patent Literature (PTL) 1 discloses a head mounted display capable of presenting (i.e., displaying) a video of content and a video of the external world. The head mounted display disclosed in PTL 1 adjusts luminance of at least one of the video of the content and the video of the external world, thus mitigating a sense of incongruity that a user feels when a switch is made between the video of the content and the video of the external world.

[Citation List]

[Patent Literature]

[PTL 1] Japanese Unexamined Patent Application Publication No. 2016-090773

[Summary of Invention]

[Technical Problem]

A display apparatus such as a head mounted display may be inappropriately configured from the viewpoint of usage by a user.
The present disclosure is made in view of the above, and an object of the present disclosure is to provide a display apparatus that is configured more appropriately.

[Solution to Problem]

In order to achieve the above object, a display apparatus according to an aspect of the present disclosure is a display apparatus including: a first lens barrel that is in a shape of a bottomed barrel and includes, as a bottom portion, a first display device that displays a first image; a second lens barrel that is in a shape of a bottomed barrel and includes, as a bottom portion, a second display device that displays a second image; a support member that is elongated in an arrangement direction in which the first lens barrel and the second lens barrel are arranged, and that, by passing through the first lens barrel and the second lens barrel in the arrangement direction, supports at least one of the first lens barrel or the second lens barrel to allow the at least one of the first lens barrel or the second lens barrel to move in the arrangement direction; and temple parts respectively connected to two end portions of the support member in the arrangement direction, wherein the first lens barrel includes a first sound pickup device and a second sound pickup device each of which detects an ultrasound, the second lens barrel includes a third sound pickup device and a fourth sound pickup device each of which detects an ultrasound, and the temple parts respectively include a fifth sound pickup device and a sixth sound pickup device each of which detects an ultrasound.

[Advantageous Effects of Invention]

The present disclosure provides a display apparatus that is configured more appropriately.

[Brief Description of Drawings]

[FIG. 1]

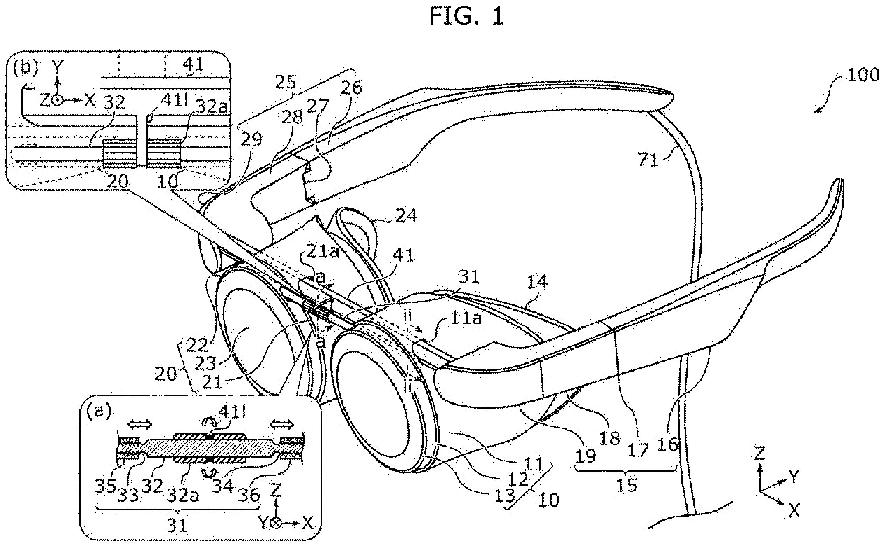

FIG. 1 is a perspective view of a head mounted display according to an embodiment.
[FIG. 2]

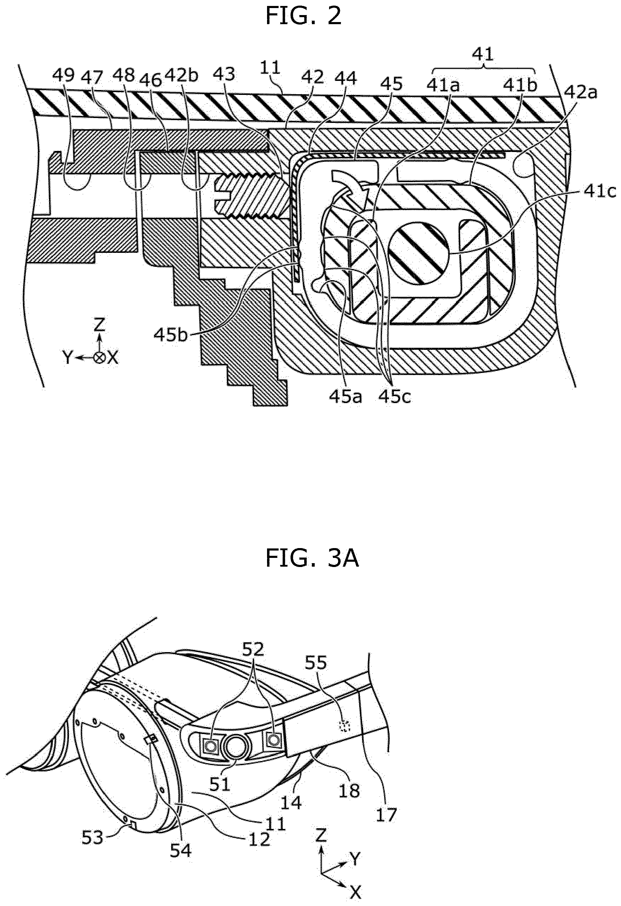

FIG. 2 is an enlarged sectional view taken along line ii-ii illustrated in FIG. 1, illustrating part of a first lens barrel in an enlarged manner.
[FIG. 3A]

FIG. 3A is a diagram for describing a configuration of the inside of a cover of the head mounted display according to the embodiment.
[FIG. 3B]

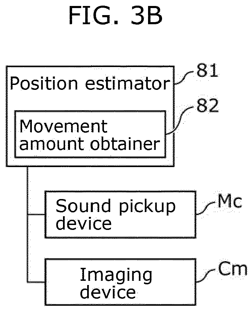

FIG. 3B is a diagram for describing a position estimator of the head mounted display according to the embodiment.
[FIG. 4]

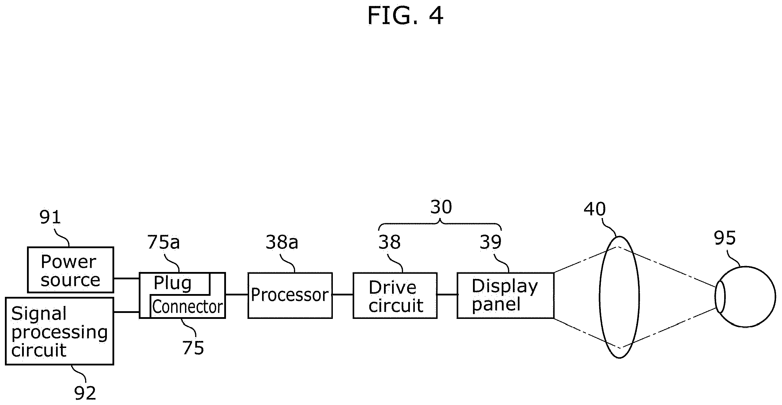

FIG. 4 is a block diagram of a functional configuration of a display system including the head mounted display according to the embodiment.
[FIG. 5]

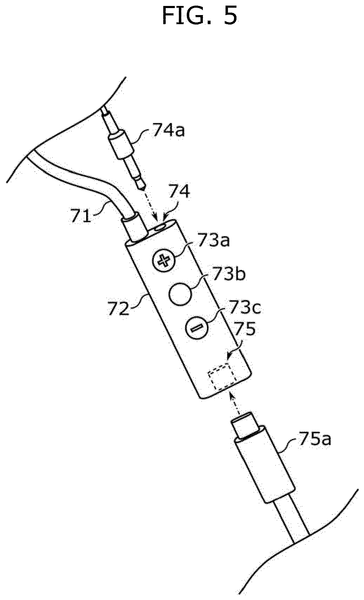

FIG. 5 is a peripheral view of a connector box of the head mounted display according to the embodiment.
[FIG. 6]

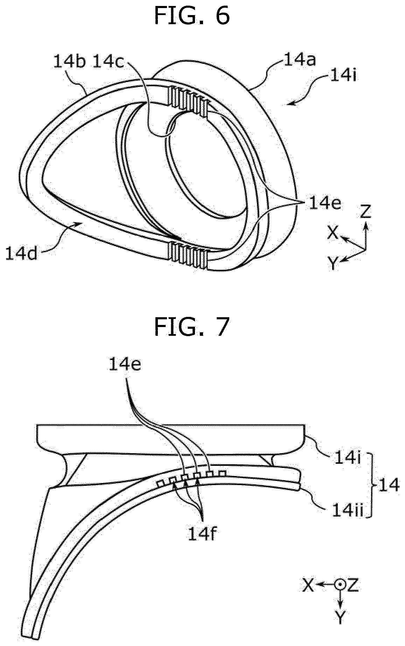

FIG. 6 is a perspective view illustrating an eye cup of the head mounted display according to the embodiment.
[FIG. 7]
FIG. 7 is a top view illustrating the eye cup of the head mounted display according to the embodiment.
[FIG. 8A]

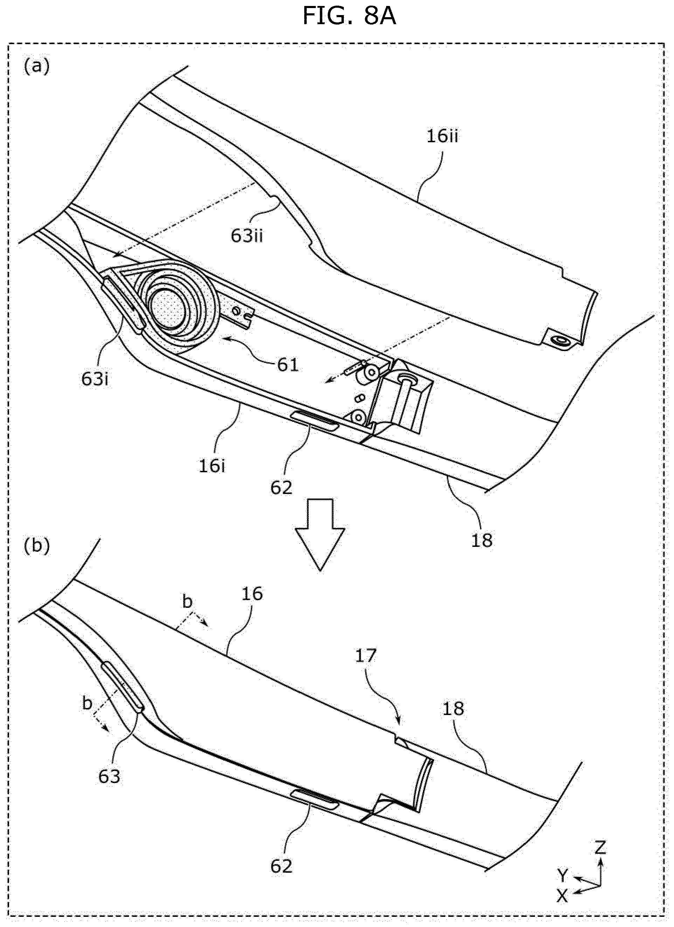

FIG. 8A is a perspective view for describing how a first temple part of the head mounted display according to the embodiment is assembled.
[FIG. 8B]

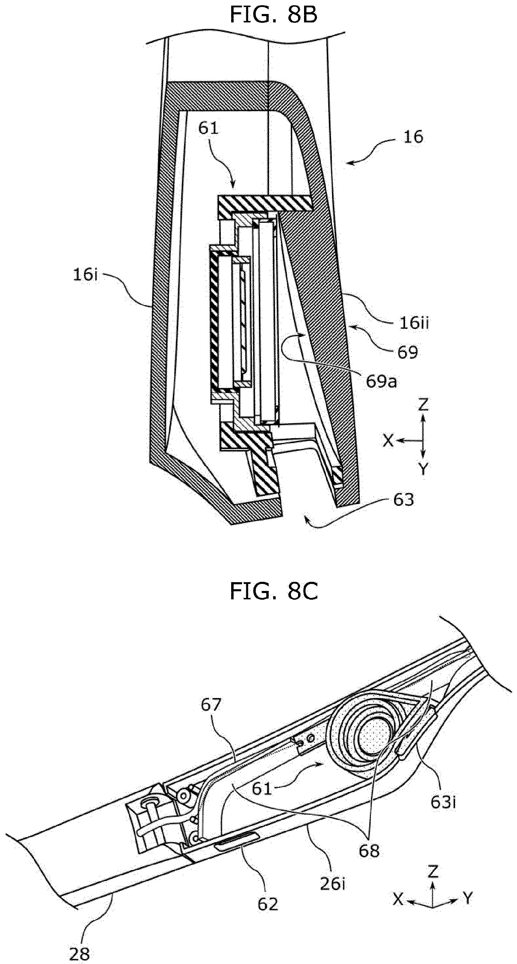

FIG. 8B is a sectional view illustrating a peripheral structure of a first rear temple part of the head mounted display according to the embodiment.
[FIG. 8C]
FIG. 8C is a perspective view illustrating a first component of a second temple part of the head mounted display according to the embodiment.
[FIG. 9]

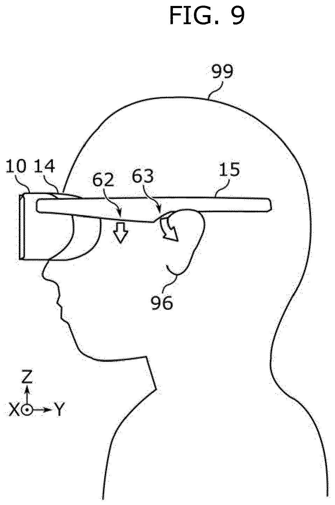

FIG. 9 is a diagram for describing a function of a sound emitter when the head mounted display according to the embodiment is used.
[FIG. 10]

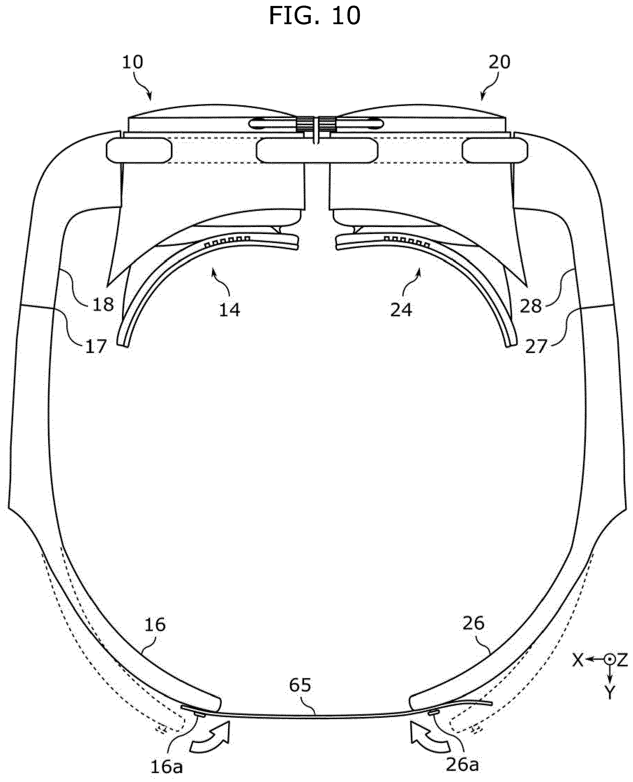

FIG. 10 is a top view for describing retaining mechanisms of the head mounted display according to the embodiment.
[FIG. 11]

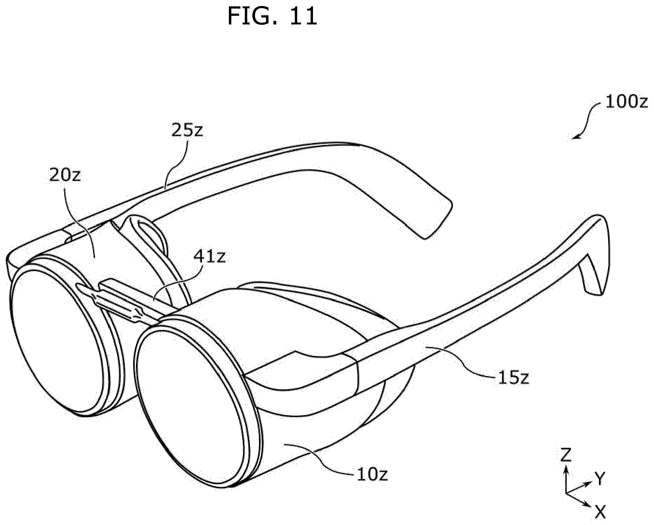

FIG. 11 illustrates a head mounted display according to another embodiment.
[FIG. 12]

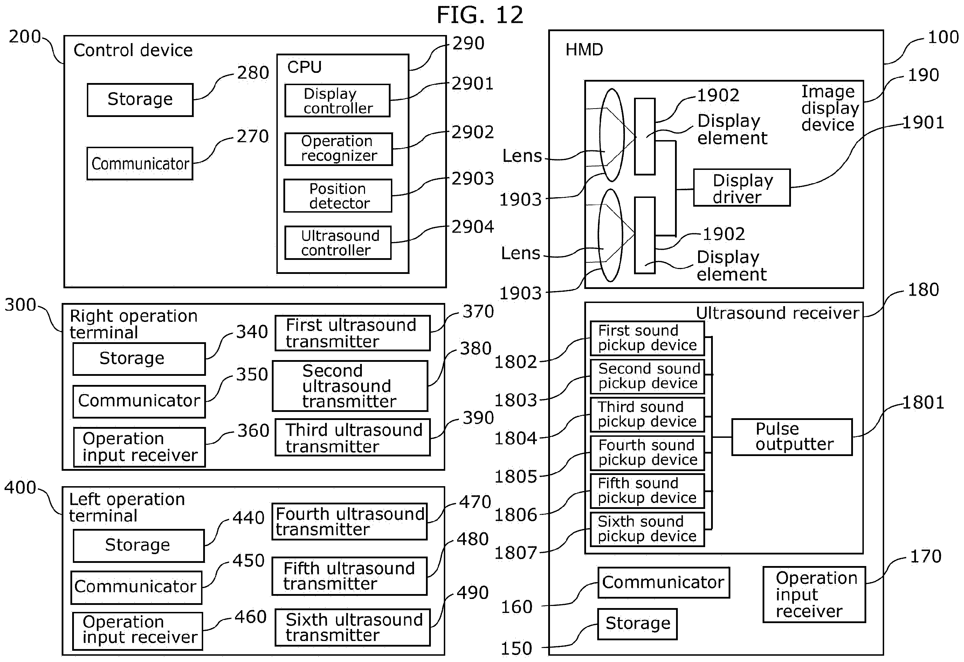

FIG. 12 is a block diagram for describing inputs via controllers to the head mounted display according to the embodiment.
[FIG. 13]

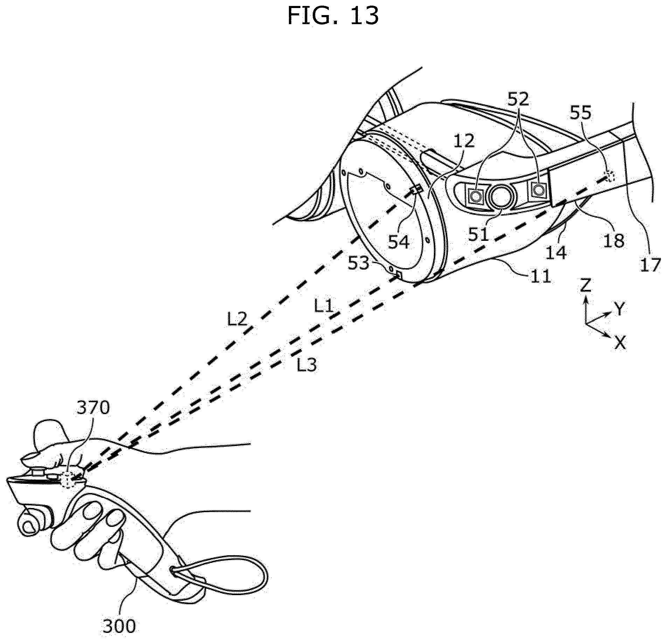

FIG. 13 is a conceptual diagram for describing a method for calculating relative distances between a controller and the head mounted display according to the embodiment.
[FIG. 14]

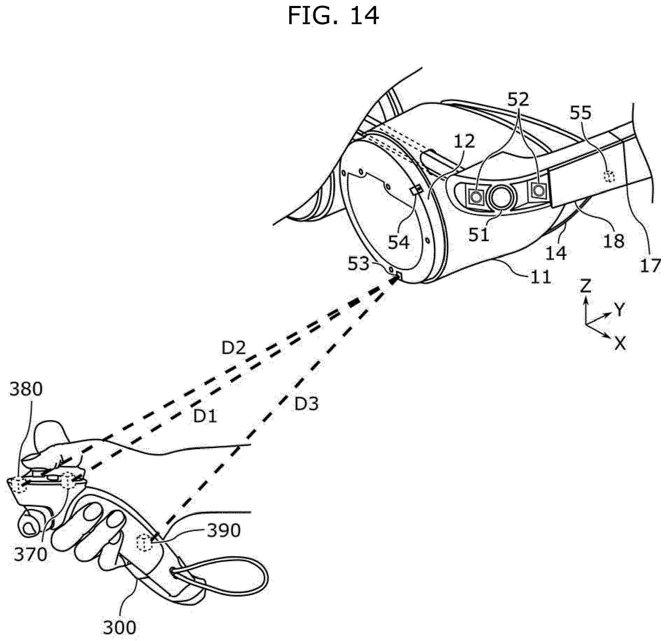

FIG. 14 is a conceptual diagram for describing a method for detecting the attitude of a controller with respect to the head mounted display according to the embodiment.

[Description of Embodiments]

(Underlying Knowledge Forming Basis of the Disclosure)

In recent years, there have been developed display apparatuses capable of allowing a user to visually recognize an image displayed on an apparently large screen by placing displays in front of eyes of the user when being worn on the head of the user. Such display apparatuses are called head mounted displays (HMDs), and many head mounted displays have been developed in accordance with a high-resolution, high-performance policy because of their properties allowing an image to be visually recognized on an apparently large screen in perspective. Thus, many head mounted displays have been provided in configurations with large housings. Such a large HMD is not appropriate for use in a public space such as a train, an office, and the open air due to problems of its portability and weight as well as being conspicuous among people.

In view of the above circumstances, the present disclosure provides a glass-type HMD that includes two barrel-shaped housings (hereinafter, referred to also as lens barrels) with which minimum areas of two displays (display devices, etc.) corresponding to right and left eyes of a user are covered so as to increase usability such as portability of the HMD as a display device. Such a glass-type HMD is aesthetically excellent and looks as if a user is wearing large sunglasses. The glass-type HMD is thus expected to be inconspicuous among people and capable of naturally blending with the surroundings.

Here, for such a glass-type HMD, there is a case where pupils of both eyes of a user do not match the positions of displays disposed in two lens barrels, thus failing to display an image appropriately. According to the present disclosure, the two lens barrels are connected together (or supported) in such a manner that the relative distance between the two lens barrels can be changed, by which the two lens barrels can be disposed freely in accordance with the positions of pupils of a user, and right and left images can be displayed appropriately. In this case, the two lens barrels are configured to be movable in a direction in which the lens barrels are arranged. For example, a support member that is elongated in the arrangement direction passes through the lens barrels, so that the two lens barrels are supported by the support member, and at least one of the two lens barrels is configured to be movable by sliding on the support member. Therefore, one of the two lens barrels is configured to be variable in its relative position with respect to the other of the two lens barrels in the arrangement direction.

In the case where the lens barrels are slidably supported by a support member, designing a clearance between the support member and the lens barrels becomes difficult. Specifically, in order to make the lens barrels smoothly slidable on the support member, it is necessary to provide gaps between the support member and the lens barrels. At the same time, if the gaps are large, the lens barrels are enabled to rotate about an axis in the arrangement direction in which the support member extends. If the rotation of the lens barrels is allowed, the barrel axes of the two lens barrels become nonparallel, and a parallel relationship cannot be maintained. If the parallel relationship between the barrel axes cannot be maintained, content that is displayed in the two lens barrels and is established based on slight parallax and the like cannot be displayed properly.

For that reason, in the present disclosure, description will be given of a configuration that can maintain the parallel relationship between barrel axes of two lens barrels by inhibiting the rotation of each lens barrel while allowing the relative positions of the two lens barrels to be changed in the arrangement direction.

In addition, an HMD is a wearable display apparatus and is used in close contact with a user so as to inhibit outside light from entering between displays and eyes of the user as much as possible particularly for eliminating the influence of the outside light. That is, a substantially enclosed space is desirably formed between an HMD and eyes of a user. In such an enclosed space, the humidity in the space increases by moisture that vaporizes from the eyes and skin of a user. Thus, fogging is likely to occur on an optical component forming a wall portion of the space, such as a lens. Accordingly, the present disclosure will also describe a configuration that can deal with this problem.

An HMD is a device that allows content to be visually perceived. However, an HMD according to the present disclosure is capable of presenting content not only with visual stimulus but also audio stimulus in combination.

In some cases, an HMD is used for application for increasing a sense of immersion of a user by controlling the presented content in response to a motion of the user. In this case, the HMD is required to be worn stably on the user with the motion. Accordingly, the present disclosure will also describe a configuration that makes an HMD wearable stably.

Note that general or specific aspects of the present disclosure may be implemented by a system, a method, an integrated circuit, a computer program, or a computer-readable recording medium such as a CD-ROM, or by any combination of systems, methods, integrated circuits, computer programs, and recording media.

Hereinafter, embodiments of the present disclosure will be described with the drawings.

Note that the embodiments described below each illustrate a general or specific example. The numerical values, shapes, materials, constituent elements, the arrangement and connection of the constituent elements, steps, the processing order of the steps, etc., illustrated in the embodiments below are mere examples, and do not intend to limit the scope of the claims. Furthermore, among the constituent elements in the following embodiments, constituent elements not recited in the independent claim will be described as optional constituent elements.

Note that the drawings are not necessarily precise illustrations. In the figures, the same reference signs are given to essentially the same constituent elements, and redundant descriptions are omitted or simplified.

It should be noted that, in the present description, terms indicating a relationship between elements, such as "parallel" and terms indicating a shape of an element, such as "rectangular" as well as numerical values and numerical ranges are not expressions that express stringent meanings but expressions each including a range that is considered to be substantially the same, for example, a discrepancy such as a margin of error on the order of several percent.

In the figures used in the following description, an X axis, a Y axis, and a Z axis that are perpendicular to one another will be used for describing a direction of each element of an HMD. An X-axis direction is a right-left direction of a user wearing an HMD. In particular, the left side as viewed from the user will be defined as a positive side in the X-axis direction.

A Y-axis direction is a front-rear direction of a user wearing an HMD. In particular, the rear side as viewed from the user will be defined as a positive side in the Y-axis direction. A Z-axis direction is an up-down direction of a user wearing an HMD. In particular, the upper side as viewed from the user will be defined as a positive side in the Z-axis direction.

The X-axis direction matches an arrangement direction of two lens barrels that are included in an HMD in an embodiment and are arranged corresponding to right and left eyes of a user. The Y-axis direction is a direction parallel to a barrel axis (or a central axis) direction of lens barrels of the HMD according to the embodiment. A plane passing through the central axis of each of the two lens barrels will be referred to as an arrangement plane of lens barrels (or simply an arrangement plane). The arrangement plane is a plane that is normally parallel to a YX plane. The Z-axis direction, which is perpendicular to the arrangement plane, may be called a height direction.

Hereinafter, the right-left direction, the front-rear direction, and the up-down direction described above, and the barrel axis direction, the central axis direction, the arrangement direction, the arrangement plane, and the height direction described above may be used in the description without specific notice. Note that the expression of these directions and the like is used for the sake of convenience in the description and should not be construed as limiting the attitude of an HMD in use.

In the following description, some elements may be denoted with names including numbers such as "first" and "second". However, the numbers do not mean an order or priority. These numbers are given simply for identifying each constituent element. Therefore, for example, the description may be read with "first" and "second" interchanged or with other numbers such as "third" and "fourth" applied in place of "first" and "second".

Many configurations in the HMD according to the present embodiment have structures that are in bilaterally symmetric combination. Therefore, the description of some configurations may be given only of one of bilateral combination, and the description of the other may be omitted.

[Embod iment]

[Basic Configuration]

First, a basic configuration of an HMD in an embodiment will be described with reference to FIG. 1 to FIG. 4. FIG. 1 is a perspective view of a head mounted display according to the embodiment.

As illustrated in FIG. 1, HMD 100 according to the embodiment includes first lens barrel 10, second lens barrel 20, adjusting mechanism 31, support member 41, first temple part 15, second temple part 25, first eye cup 14, and second eye cup 24.

First lens barrel 10 is a display module for a single eye that displays, for example, an image for a left eye of user 99 (see FIG. 9 described later). First lens barrel 10 is formed by assembling resin and metallic materials. First lens barrel 10 includes therein a first display device (part of display device 30 in FIG. 4 described later) that displays a first image for one of eyes (the left eye in this case) of user 99 and a first convex lens (part of convex lens 40 in FIG. 4 described later) that enlarges an image displayed on the first display device. Specifically, first lens barrel 10 is in a shape of a bottomed barrel and includes the first display device as its bottom portion.

First lens barrel 10 is constituted by first main portion 11, first sub portion 12, and first panel 13. As illustrated in the figure, first lens barrel 10 has a double-bottom structure that is constituted by first main portion 11, first sub portion 12, and first panel 13. As illustrated in the figure, first main portion 11, first sub portion 12, and first panel 13 are formed of different members. In the following description, first lens barrel 10 will be described as having a structure in a shape of a bottomed barrel having a double bottom. However, first lens barrel 10 in the HMD according to the present disclosure may be in a shape of a bottomed barrel with a single bottom simply constituted only by first main portion 11. There is no particular limitation on the configuration of such a bottom of first lens barrel 10. The HMD can be provided with a configuration having a plurality of bottoms accommodating a plurality of functional units.

The first display device and the first convex lens are disposed inside first main portion 11, which is in a shape of a barrel opened toward the positive side in the Y-axis direction. Note that the first convex lens may be formed of one lens or may be formed by assembling two or more lenses. In other words, the first convex lens may be a lens unit including a plurality of lenses.

Second lens barrel 20 is a display module for a single eye that displays, for example, an image for a right eye of user 99. Second lens barrel 20 is formed by assembling resin and metallic materials. Second lens barrel 20 includes therein a second display device (part of display device 30 in FIG. 4 described later) that displays a second image for the other of the eyes (the right eye in this case) of user 99 and a second convex lens (part of convex lens 40 in FIG. 4 described later) that enlarges an image displayed on the second display device. Specifically, second lens barrel 20 is in a shape of a bottomed barrel and includes the second display device as its bottom portion.

Second lens barrel 20 is constituted by second main portion 21, second sub portion 22, and second panel 23. The second display device and the second convex lens are disposed inside second main portion 21, which is in a shape of a barrel opened toward the positive side in the Y-axis direction.

First lens barrel 10 and second lens barrel 20 are connected to each other by adjusting mechanism 31 and support member 41.

Support member 41 is a rod-shaped member that is elongated in the arrangement direction and of which an outer diameter is smaller than inner diameters of first through-hole 11a formed in first lens barrel 10 and second through-hole 21a formed in second lens barrel 20. For example, support member 41 is formed of metallic material such as aluminum and stainless steel. Support member 41 may be formed of resin that has sufficient strength and durability. Support member 41 is inserted into first through-hole 11a and second through-hole 21a. As a result, support member 41 passes through first lens barrel 10 and second lens barrel 20 in the arrangement direction. The positional relationship between first lens barrel 10 and second lens barrel 20 is changed based on a length of the insertion of support member 41 into first through-hole 11a and second through-hole 21a.

Here, with reference to FIG. 2, the relation among support member 41, and first lens barrel 10 and second lens barrel 20 will be further described. FIG. 2 is an enlarged sectional view taken along line ii-ii illustrated in FIG. 1, illustrating part of the first lens barrel in an enlarged manner.

As illustrated in FIG. 2, in HMD 100 according to the present embodiment, frame 42, member 46 that is used for supporting convex lens 40, and member 47 for attaching eye cup 14 are attached to first main portion 11. Frame 42 is formed of metallic material such as aluminum and stainless steel. Frame 42 may be formed of resin that has sufficient strength and durability. Frame 42 is fixed to first main portion 11 in a region not illustrated, reinforces entire first lens barrel 10 from the inside of first lens barrel 10, and is used for fixing members constituting first lens barrel 10. First through-hole 11a passes through the inside and outside of the barrel shape of first main portion 11 and passes through frame 42 in the X-axis direction. Of first through-hole 11a, a portion related to frame 42 will be referred to as frame through-hole 42a. First through-hole 11a is formed by making frame through-hole 42a and a portion that passes through the inside and outside of the barrel shape of first main portion 11 communicate with each other.

In the present embodiment, support member 41 includes first component 41a that is elongated in the X-axis direction and has a U-shape section and second component 41b that is elongated in the X-axis direction and has a U-shape section of a size capable of accommodating first component 41a. As illustrated in the figure, by assembling first component 41a and second component 41b together, support member 41 is formed with an internal space that is elongated in the X-axis direction. For example, the internal space accommodates internal wiring 41c as illustrated as a circular section in the figure.

As in HMD 100 according to the present embodiment, support member 41 is one of limited components that connect first lens barrel 10 and second lens barrel 20 and thus is used for disposing a component for communication necessary between first lens barrel 10 and second lens barrel 20, such as internal wiring 41c described above. Further, similar internal wiring may be accommodated in a space that is provided inside adjusting mechanism 31. A wire member used for the wiring is a component that disfigures the HMD when disposed at a location visible as its appearance, and is a component that has the risk of disconnection or the like. Therefore, by accommodating the wire member inside another component in this manner, the disfigurement can be avoided, and in addition, the possibility of functional breakage such as disconnection can be decreased.

Here, a gap is formed between support member 41 and frame through-hole 42a. Slider 45 is disposed such that the gap is filled with slider 45. Slider 45 is made of a resin material having lubricity, such as polyacetal, and retains support member 41 slidably with respect to frame through-hole 42a.

In the present embodiment, slider 45 is pressed from outside to be deformed, thereby clamping support member 41 and producing friction between slider 45 and frame through-hole 42a. As a result, when slider 45 is pressed from outside, sliding between frame 42 and support member 41 is inhibited, and in addition, the rotation of frame 42 about an axis parallel to the X-axis direction with respect to support member 41 is inhibited. That is, the rotation of first lens barrel 10 about the X axis with respect to support member 41 is inhibited.

To press slider 45 from outside, screw member 43 and pressure dispersion plate 44 are used. Screw member 43 is formed of a metallic material such as aluminum and stainless steel and gives pressing force to slider 45 when screwed into threaded hole 42b formed in frame 42. Pressure dispersion plate 44 is formed of a metallic material such as aluminum and stainless steel and inhibits screw member 43 from pressing slider 45 directly when screw member 43 is screwed into threaded hole 42b. Further, pressure dispersion plate 44 adjusts a direction of the pressing force given by screw member 43, thus regulating a direction in which slider 45 is deformed.

The course from giving the pressing force by screw member 43 to the deformation of slider 45 will be described below more in detail. When screwed into threaded hole 42b, screw member 43 advances toward a negative side in the Y-axis direction. A thread of screw member 43 meshes with a thread of threaded hole 42b, and thus screw member 43 maintains its depth of screwing without being pushed back toward the positive side in the Y-axis direction by stress of slider 45 and the like. As a result, pressure dispersion plate 44 is given pressing force based on the depth of screwing of screw member 43.

By the pressing force from screw member 43, pressure dispersion plate 44 moves toward the negative side in the Y-axis direction. Pressure dispersion plate 44 includes an XZ plate that extends along a plane intersecting a direction of the pressing (i.e., an XZ plane) so as to disperse the pressing force from screw member 43, as illustrated in the figure. Pressure dispersion plate 44 also includes an XY plate that extends along an XY plane intersecting the XZ plane so that pressure dispersion plate 44 is inhibited from inclining in a direction in which the pressing force deviates, that is, so that the XZ plate does not intersect the XZ plane.

The XY plate is inserted between an end surface of slider 45 on the positive side in the Z-axis direction and an inner surface of frame through-hole 42a on the positive side in the Z-axis direction, thereby being inhibited from moving in the Z-axis direction. Of inclinations of the XZ plate in the direction in which the pressing force from screw member 43 deviates, an inclination in which the XZ plate rotates about the X axis as a rotation axis requires a movement of the XY plate in the Z-axis direction. Therefore, the inhibition of the XY plate from moving in the Z-axis direction as described above inhibits the inclination in which the XZ plate rotates about the X axis as a rotation axis.

The XZ plate extends between an end surface of slider 45 on the positive side in the Y-axis direction and an inner surface of frame through-hole 42a on the positive side in the Y-axis direction, thereby being inhibited from moving in the Y-axis direction. Of inclinations of the XZ plate in the direction in which the pressing force from screw member 43 deviates, an inclination in which the XZ plate rotates about the Z axis as a rotation axis requires a movement of the XZ plate in the Y-axis direction. Therefore, the inhibition of the XZ plate from moving in the Y-axis direction as described above inhibits the inclination in which the XZ plate rotates about the Z axis as a rotation axis.

In this manner, with pressure dispersion plate 44, the pressing force from screw member 43 presses slider 45 from the positive side toward negative side in the Y-axis direction with the direction of the pressing force being maintained. Note that, in this case, the pressing force from screw member 43 has a magnitude that depends on an area of a tip of screw member 43 in the direction of screwing. If pressure dispersion plate 44 is absent, the above-described pressing force can break slider 45, which is relatively soft. Pressure dispersion plate 44 inhibits such a breakage of slider 45 by dispersing, on the XZ plane, an area on which the pressing force from screw member 43 acts.

Slider 45 is formed in such a manner as to substantially surround support member 41 with slider 45 in the section in the figure and to cover support member 41 with slider 45. To be precise, slider 45 is opened at a portion in the Y-axis direction at its end portion on the positive side in the Z-axis direction and is allowed to be deformed by the size of the opening. Further, slider 45 is formed with recessed portion 45a that is recessed outward, at a portion of an inner side facing support member 41 with which the positive side of support member 41 in the Y-axis direction is covered. Recessed portion 45a extends along the X-axis direction, forming a thin-wall portion extending along the X-axis direction in slider 45. By providing the thin-wall portion, which is easily deformed relative to the other portion, a mode of the deformation of slider 45 is regulated such that the deformation occurs in the vicinity of the thin-wall portion.

The XZ plate described above is formed in such a manner as to be disconnected on a positive side of recessed portion 45a in the Z-axis direction. The pressing force from screw member 43 presses a portion of slider 45 upper than recessed portion 45a toward the negative side in the Y-axis direction. Slider 45 is further formed with projecting portions 45b that project outward, at a portion of slider 45 with which support member 41 is covered on its positive side in the Y-axis direction and at a portion in the vicinity of recessed portion 45a. As a result, the pressing by the XZ plate first presses projecting portions 45b.

Since projecting portions 45b are formed in the vicinity of recessed portion 45a, the pressing against projecting portions 45b significantly causes the deformation of the thin-wall portion corresponding to recessed portion 45a. Specifically, a portion of slider 45 that is on the positive side in the Y-axis direction and upper than recessed portion 45a pivots on a pivot axis that is parallel to the X-axis direction and passes through the thin-wall portion, as illustrated by a solid-white arrow in the figure.

The pivoting portion of slider 45 presses support member 41 in a direction of the pivot. Of the pivoting portion of slider 45, a surface on the support member 41 side is formed with projecting portions 45c that project toward support member 41. That is, pressing force of the pressing against support member 41 by the pivoting portion of slider 45 is concentrated onto projecting portions 45c. As a result, slider 45 strongly presses support member 41, thus inhibiting sliding between support member 41 and slider 45. The deformation of slider 45 acts in such a manner as to fill a gap around support member 41, thus inhibiting support member 41 from rotating about an axis in the X-axis direction with respect to frame 42.

In this manner, relative movements between support member 41 and slider 45, between: slider 45; and pressure dispersion plate 44 and frame through-hole 42a, between the pressure dispersion plate and screw member 43, and between screw member 43 and threaded hole 42b are inhibited. As a result, support member 41 is pressed against first lens barrel 10, inhibiting the relative movement. That is, first lens barrel 10 is inhibited from rotating and sliding with respect to support member 41.

Note that the degrees of inhibition of the relative movements can be adjusted by changing the pressing force by screw member 43. As seen from the above, screw member 43, threaded hole 42b, pressure dispersion plate 44, and slider 45 form an example of a pressing mechanism that presses support member 41 in a direction intersecting the arrangement direction. In particular, screw member 43 and threaded hole 42b form an example of an adjuster that allows the adjustment of the pressing force for pressing support member 41. The depth of screwing of screw member 43 is adjusted with adjustment hole 48 and adjustment hole 49 that are provided in member 46 and member 47, respectively. In the case where such adjustment holes are not provided, the depth of screwing of screw member 43 may be adjusted before member 46 and member 47 are mounted in the assembly of HMD 100 before its shipment.

One or more pressing mechanisms and the like described above are provided in first lens barrel 10. Two or more pressing mechanisms and the like may be provided in first lens barrel 10 so as to further increase the pressing force. For example, pressing mechanisms and the like may be provided in vicinities of both openings of first through-hole 11a. The same configuration is provided in second lens barrel 20. A pressing mechanism and the like having the same configuration in a bilateral symmetry is provided in second lens barrel 20, and therefore, description of the pressing mechanism and the like provided in second lens barrel 20 is dispensed with by reading the description of the pressing mechanism and the like provided in first lens barrel 10 with the positive side and the negative side in the X-axis direction interchanged.

Referring back to FIG. 1, the description of the configuration of HMD 100 will be resumed. Here, part (a) of FIG. 1 is a sectional view taken along line a-a in the figure, illustrating adjusting mechanism 31 and the vicinity of adjusting mechanism 31. As illustrated in part (a) of FIG. 1, adjusting mechanism 31 provided between first lens barrel 10 and second lens barrel 20 includes adjusting member 32 that is elongated in the X-axis direction, threaded hole 36 that is embedded in first lens barrel 10 and has a thread groove in a first helical shape, and threaded hole 35 that is embedded in second lens barrel 20 and has a thread groove in a second helical shape. Adjusting member 32 is threaded at its both end portions in the X-axis direction. Specifically, adjusting member 32 includes, at its one end on the positive side in the X-axis direction, thread portion 34 formed with a thread in the first helical shape and includes, at the other end on the negative side in the X-axis direction, thread portion 33 formed with a thread in the second helical shape.

Thread portion 34 is screwed into threaded hole 36 embedded in first lens barrel 10, and thread portion 34 is inserted or removed into or from threaded hole 36 by rotating adjusting member 32 about an axis parallel to the X-axis direction. Thread portion 33 is screwed into threaded hole 35 embedded in second lens barrel 20, and thread portion 33 is inserted or removed into or from threaded hole 35 by rotating adjusting member 32 about an axis parallel to the X-axis direction.

These threaded holes are provided in, for example, first sub portion 12 of first lens barrel 10 and second sub portion 22 of second lens barrel 20. In particular, providing the threaded hole on the inner side of first sub portion 12 or second sub portion 22 from a surface of first sub portion 12 or second sub portion 22 by a sufficient length makes it difficult for the thread portion to project from first sub portion 12 or second sub portion 22 when the thread portion is inserted or removed. This makes HMD 100 aesthetically excellent and additionally inhibits the occurrence of a malfunction of adjusting mechanism 31 due to the intrusion of a foreign object.

Adjusting member 32 is equipped, in the vicinity of its central portion in its longitudinal direction, with knob member 32a for improving the operability of adjusting member 32. Knob member 32a is a member in a shape of a barrel, and the inner diameter of knob member 32a matches the outer diameter of adjusting member 32. Accordingly, knob member 32a is fixed by, for example, press-fitting adjusting member 32 into knob member 32a, and adjusting member 32 becomes thicker by the thickness of knob member 32a. This improves the operability of rotating adjusting member 32.

Here, knob member 32a is constituted by two members divided into two in the X-axis direction, with fixing member 411 interposed therebetween. Fixing member 41l has an insertion hole of which the inner diameter is sufficiently larger than the outer diameter of adjusting member 32 (i.e., a gap is provided at least not to bring fixing member 411 and adjusting member 32 into contact with each other). Adjusting member 32 is inserted into the insertion hole of fixing member 411, and the two members of knob member 32a are press-fitted in such a manner as to sandwich fixing member 41l from both sides of fixing member 41l in the X-axis direction.

Accordingly, adjusting member 32 is rotatable about the axis parallel to the X-axis direction even in a state of being inserted into fixing member 41l, and the contact of knob member 32a with fixing member 41l fixes the relative position of adjusting member 32 with respect to fixing member 41l in the X-axis direction. Further, since adjusting member 32 are inserted into the insertion hole of fixing member 41l, the relative movement of adjusting member 32 with respect to fixing member 41l is restricted also in the Z-axis direction and the Y-axis direction.

Part (b) of FIG. 1 is an enlarged top view of fixing member 41l and the vicinity of fixing member 41l as viewed from the positive side in the Z-axis direction in an enlarged manner. In the figure, of constituent elements in the vicinity of fixing member 41l, support member 41 and adjusting member 32 are illustrated with solid lines, and other constituent elements are illustrated with broken lines for distinguishing purposes. As illustrated in part (b) of FIG. 1, fixing member 41l are joined to support member 41 to be integrated together. That is, fixing member 41l is configured to be relatively immovable with respect to support member 41.

Fixing member 41l therefore fix the relative position of adjusting member 32 with respect to support member 41 in the X-axis direction. If such a fixing mechanism is absent, for example, when the relative position between first lens barrel 10 and second lens barrel 20 is changed by releasing the above-described pressing mechanism and handling adjusting member 32, first lens barrel 10 and second lens barrel 20 may be moved together with adjusting mechanism 31 in one of directions in the X-axis direction.

The fixing mechanism fixes the relative position of adjusting member 32 with respect to support member 41 in the X-axis direction, thus inhibiting first lens barrel 10 and second lens barrel 20 from being moved together with adjusting mechanism 31 in one of directions in the X-axis direction. This makes it easy to change the relative position between first lens barrel 10 and second lens barrel 20, facilitating the adjustment of the positions of lens barrels for user 99. The position of knob member 32a may be fixed at a position shifted from the center of adjusting member 32 to support a case where the position of the eyes of user 99 are in left-right asymmetry.

Knob member 32a is not indispensable in this configuration. For example, the same advantageous effect can be provided with a configuration in which only a recessed portion or a projecting portion for inhibiting fixing member 41l from moving in the X-axis direction is provided. Further, in order to provide the advantageous effect, it suffices that only the relative position between fixing member 41l and adjusting member 32 in the X-axis direction is fixed. Accordingly, as the fixing member, a U-shaped member of which an insertion hole provided as in fixing member 41l described above is opened toward the negative side in the Y-axis direction, a protrusion-shaped member configured only to be hooked between the two members of knob member 32a, or the like can be used.

First temple part 15 has a front end portion that is connected to a one end portion of support member 41 on the positive side in the X-axis direction and has a rear end portion that is to be hung on, for example, a left ear of user 99. First temple part 15 is formed of resin and metal in combination. First temple part 15 is formed by connecting first front temple part 18 on a front end side of first temple part 15 and first rear temple part 16 on a rear end side of first temple part 15 together pivotably via hinge portion 17. Hinge portion 17 includes a rod-shaped member that serves as a pivot shaft, a connection member that connects first front temple part 18 pivotably to the rod-shaped member, and a connection member that connects first rear temple part 16 pivotably to the rod-shaped member.

First front temple part 18 is provided with cover 19 on its front end side. Cover 19 will be described below together with an internal configuration with reference to FIG. 3A. FIG. 3A is a diagram for describing a configuration of the inside of the cover of the head mounted display according to the embodiment. FIG. 3A illustrates a configuration of first front temple part 18 with cover 19 removed and the vicinity of first front temple part 18 as viewed from the same point of view as with HMD 100 illustrated in FIG. 1.

As illustrated in FIG. 3A, first imaging device 51 is disposed on a portion of first front temple part 18 that is covered with cover 19. First imaging device 51 is a camera for generating a peripheral image of HMD 100. More specifically, first imaging device 51 receives reflected light of infrared light emitted from infrared light source 52 with light receiving elements of first imaging device 51 arranged in a two-dimensional pattern and generates an infrared image. The infrared image generated by first imaging device 51 is used for detecting changes in the attitude of HMD 100. For example, pattern matching is performed on an object in an infrared image generated by first imaging device 51 at a first time point and an object in an infrared image generated by first imaging device 51 at a second time point. This enables the calculation of how the attitude of HMD 100 has changed based on to what position the object has moved from the first time point to the second time point.

In such a process, an object is desirably recognized three-dimensionally. For that reason, a second imaging device that is the same as first imaging device 51 is disposed inside cover 29 of second front temple part 28 of HMD 100 to be described later. From infrared images generated by first imaging device 51 and the second imaging device, an object can be recognized three-dimensionally based on the parallax between first imaging device 51 and the second imaging device. For the three-dimensional recognition of an object using parallax, the relative position between first imaging device 51 and the second imaging device is desirably fixed.

In HMD 100 according to the present embodiment, first imaging device 51 and the second imaging device are respectively disposed on first temple part 15 and second temple part 25 that are fixedly connected to both ends of support member 41. This fixes the relative position between first imaging device 51 and the second imaging device, enabling satisfactory calculation of changes in the attitude of HMD 100.

First imaging device 51 and the second imaging device described above may further generate visible light images. When the visible light images generated by first imaging device 51 and the second imaging device are displayed on a display disposed in first lens barrel 10 and on a display disposed in second lens barrel 20, respectively, user 99 can visually recognize the external world of HMD 100. At this time, in a case where first imaging device 51 and the second imaging device have optical axes that differ from a forward direction of user 99, image processing for correcting the axes may be performed before the visible light images are displayed on the displays. This mitigates a sense of incongruity caused by a change in sight in wearing HMD 100, allowing user 99 to feel as if user 99 is not wearing HMD 100.

In HMD 100 illustrated in FIG. 3A, first panel 13 of first lens barrel 10 is further removed, exposing an internal configuration of first panel 13. Here, inside first panel 13, first sound pickup device 53 and second sound pickup device 54 are disposed. First sound pickup device 53 and second sound pickup device 54 are disposed such that first sound pickup device 53 and second sound pickup device 54 collect sound entering through a gap between first panel 13 and first sub portion 12 after first panel 13 is attached. This makes these sound pickup devices difficult to be seen from the outside of HMD 100, and thus HMD 100 that is aesthetically excellent can be provided. In second lens barrel 20, a third sound pickup device and a fourth sound pickup device are disposed such that the third sound pickup device and the fourth sound pickup device, and first sound pickup device 53 and second sound pickup device 54 are bilaterally symmetric.

As illustrated in the figure, fifth sound pickup device 55 is disposed in first temple part 15, particularly in first front temple part 18. Fifth sound pickup device 55 is disposed such that fifth sound pickup device 55 collects, for example, sound that comes through a sound collection hole that is formed in a surface at a lower portion of first front temple part 18. This makes fifth sound pickup device 55 difficult to be seen from the outside of HMD 100, and thus HMD 100 that is aesthetically excellent can be provided. In second lens barrel 20, a sixth sound pickup device is disposed such that the sixth sound pickup device and fifth sound pickup device 55 are bilaterally symmetric. The six sound pickup devices described above are each configured to collect ultrasound that is generated based on a specific frequency, period, timing, or the like (will be referred to also as specific ultrasound).

When using HMD 100, user 99 may hold, in right and left hands, controllers in each of which a transmitter generating the specific ultrasound is built in. In this case, by collecting specific ultrasounds generated from the controllers with the six sound pickup devices, the relative positions and the amounts of rotation (orientations and inclinations) of the controllers with respect to HMD 100 can be calculated from a phase differences, arrival times, or the like. Since the controllers are held by, for example, the right and left hands of user 99, the motions of the hands of user 99 can be detected from the relative positions of the controllers. In this manner, HMD 100 can perform a process of, for example, making an input to content (e.g., changing a video displayed on the displays) based on the positions and orientations of the hands of user 99. Further, by the same approach, devices that make an input to HMD 100 based on changes in the relative positions and the amounts of rotation (orientations and inclinations) can be used in combination with HMD 100. That is, the controllers are an example of input devices that makes an input to HMD 100 based on changes in the relative positions and the amounts of rotation (orientations and inclinations).

The above-described six sound pickup devices are preferably disposed away from one another. There are however restrictions on the disposition of the sound pickup devices because HMD 100 has a configuration in which the two lens barrels are supported by rod-shaped support member 41 in relation to wearability for user 99 and appearance properties. For that reason, in HMD 100, first sound pickup device 53 and second sound pickup device 54 are disposed at a lower end of first lens barrel 10 and an end portion of first lens barrel 10 on an opposite side to second lens barrel 20. In second lens barrel 20, the third sound pickup device and the fourth sound pickup device are disposed in the same disposition in a bilateral symmetry.

While four of the above-described sound pickup devices are arranged on substantially the same plane parallel to the XZ plane, fifth sound pickup device 55 is disposed in first front temple part 18 in such a manner as to be disposed at a position off the same plane. The sixth sound pickup device is similarly disposed in second front temple part 28. As seen from the above, the six sound pickup devices are disposed in such a manner as to be spaced away from one another within the limited constituent elements of HMD 100.

[Input to HMD via Controller]

FIG. 12 is a block diagram for describing inputs via controllers to the head mounted display according to the embodiment. As illustrated in FIG. 12, when HMD 100 is used, HMD 100 is connected to control device 200, and right operation terminal 300 and left operation terminal 400, which are each a kind of controller (hereinafter, right operation terminal 300 and left operation terminal 400 may be referred to collectively as controllers).

Here, HMD 100 includes image display device 190, ultrasound receiver 180, operation input receiver 170, communicator 160, and storage 150. Image display device 190 includes display driver 1901, two display elements 1902, and two or more sets of lenses 1903. The above configurations of HMD 100 are implemented by combining one or more of the constituent elements of HMD 100 described above.

Control device 200 receives signals for controlling the configurations of HMD 100 from the controllers.

Control device 200 includes communicator 270, storage 280, and CPU 290. Control device 200 is wirelessly connected via communicator 270 to communicators included in HMD 100, right operation terminal 300, and left operation terminal 400 using a wireless communications technology such as wireless LAN and Bluetooth (R).

Storage 280 is an information storage device formed of a semiconductor memory, such as a ROM and a RAM, or the like. Storage 280 stores various computer programs to be executed by CPU 290 and various types of data to be used in the execution. As one of the types of data, storage 280 stores, for example, content data that contains an image or a video to be displayed by image display device 190 that performs display in HMD 100, configuration data for identifying a gesture operation performed by user 99 with the controllers (changes in various sensor values generated by the operation) as input signals to control device 200.

CPU 290 includes display controller 2901, operation recognizer 2902, position detector 2903, and ultrasound controller 2904. CPU 290 reads and executes the computer programs stored in storage 280, functioning as ultrasound controller 2904, position detector 2903, operation recognizer 2902, and display controller 2901 described below using signals transmitted or received to or from the controllers.

Ultrasound controller 2904 controls the operation of transmitters in the controllers each of which generates ultrasound. As illustrated in the figure, right operation terminal 300 includes, as the transmitters, first ultrasound transmitter 370, second ultrasound transmitter 380, and third ultrasound transmitter 390. Left operation terminal 400 includes, as the transmitters, fourth ultrasound transmitter 470, fifth ultrasound transmitter 480, and sixth ultrasound transmitter 490. Ultrasound controller 2904 controls first ultrasound transmitter 370, second ultrasound transmitter 380, third ultrasound transmitter 390, fourth ultrasound transmitter 470, fifth ultrasound transmitter 480, and sixth ultrasound transmitter 490 in generating ultrasound and stopping the generation. This enables modes of ultrasounds, such as generation timing and period, transmitted by first ultrasound transmitter 370, second ultrasound transmitter 380, third ultrasound transmitter 390, fourth ultrasound transmitter 470, fifth ultrasound transmitter 480, and sixth ultrasound transmitter 490 to be controlled in any mode.

Position detector 2903 detects the attitudes (positions and orientations) of right operation terminal 300 and left operation terminal 400 from signals from at least three ultrasound transmitters provided in each of right operation terminal 300 and left operation terminal 400 based on ultrasonic pulse signals that are received from right operation terminal 300 and left operation terminal 400 by first sound pickup device 1802 to sixth sound pickup device 1807 included in ultrasound receiver 180 of HMD 100. First sound pickup device 1802 to sixth sound pickup device 1807 included in HMD 100 correspond to first sound pickup device 53 to the sixth sound pickup device according to the embodiment and are here described without distinction between right and left. First sound pickup device 1802 to sixth sound pickup device 1807 thus may correspond to first sound pickup device 53 to the sixth sound pickup device in any manner.

Operation recognizer 2902 recognizes the relative positions and the attitudes (orientations and directions) of right operation terminal 300 and left operation terminal 400 detected by position detector 2903 and temporal changes in the relative position and the attitudes (orientations and directions) as operation information that is equivalent to input signals to HMD 100. Examples of the operation information include information on an operation of moving an image displayed on image display device 190 or a pointer that is superimposed in the image and selecting a location pointed by the pointer. Specifically, the operation is a tapping operation to specific coordinates in the image, a wiping operation to move the image slidingly in a specific direction, or the like. Note that, as a concrete method for the operation recognition of recognizing the sensor values as the operation information by operation recognizer 2902, all types of existing techniques can be selected and used appropriately.

Based on the operation information recognized by operation recognizer 2902, display controller 2901 performs control in such a manner as to change an image displayed on image display device 190 of HMD 100.

Right operation terminal 300 and left operation terminal 400 are each a hand-held terminal device to be grasped by user 99 with the right hand and the left hand of user 99. Note that, as such controllers, wearable terminal devices, which dispense with grasping or the like by user 99, may be used. The following description will be mainly given of right operation terminal 300. Left operation terminal 400 also has the same configuration as that of right operation terminal 300. The description of left operation terminal 400 may be omitted or simplified by referring to the description of right operation terminal 300.

Right operation terminal 300 is provided with first ultrasound transmitter 370, second ultrasound transmitter 380, and third ultrasound transmitter 390 that are capable of generating ultrasounds of frequencies different from one another. Right operation terminal 300 further includes operation input receiver 360 including a trackpad not illustrated and cursor keys not illustrated, or the like. Right operation terminal 300 includes storage 340 and communicator 350. Left operation terminal 400 similarly includes fourth ultrasound transmitter 470, fifth ultrasound transmitter 480, and sixth ultrasound transmitter 490 that are capable of generating ultrasounds of frequencies different from one another, operation input receiver 460, storage 440, and communicator 450. Note that only one of such right and left controllers may be provided. Further, at least one transmitter transmitting ultrasound provided in the controller enables the detection of the relative position. This is useful for an application that does not need the direction of the controller.

As described above, HMD 100 is provided with first sound pickup device 1802 to sixth sound pickup device 1807 that receive ultrasounds generated by first ultrasound transmitter 370 to sixth ultrasound transmitter 490. The ultrasounds received by first sound pickup device 1802 to sixth sound pickup device 1807 are output to pulse outputter 1801 via a receiving circuit not illustrated that removes noise. Pulse outputter 1801 outputs the received ultrasounds to control device 200 as pulse signals. Based on the pulse signals, position detector 2903 of control device 200 detects the positions of right operation terminal 300 and left operation terminal 400.

A method for detecting the positions and the orientations of right operation terminal 300 and left operation terminal 400 by position detector 2903 described above will be described below. For simplification of description, a position detection method in which one of first ultrasound transmitter 370 to sixth ultrasound transmitter 490 (in this case, first ultrasound transmitter 370) and three of first sound pickup device 53 to the sixth sound pickup device (in this case, first sound pickup device 53, second sound pickup device 54, and fifth sound pickup device 55) are used, as illustrated in FIG. 13, will be described below.

A given position of which the relative position with respect to HMD 100 is constant is defined as the origin of an orthogonal coordinate system, the right-left direction of user 99 wearing HMD 100 is defined as the X-axis direction of the orthogonal coordinate system, the front-rear direction of the user is defined as the Y-axis direction of the orthogonal coordinate system, and the up-down direction of the user is defined as the Z-axis direction of the orthogonal coordinate system.

Position detector 2903 can calculate a coordinate position (x, y, z) of right operation terminal 300, particularly first ultrasound transmitter 370, in the orthogonal coordinate system by solving Equation (1) to Equation (3) shown below as simultaneous equations based on propagation time T1 taken by an ultrasound from first ultrasound transmitter 370 to reach first sound pickup device 53, propagation time T2 taken by the same ultrasound to reach second sound pickup device 54, and propagation time T3 taken by the same ultrasound to reach fifth sound pickup device 55.

In this case, a coordinate position (x1, y1, z1) of first sound pickup device 53, a coordinate position (x2, y2, z2) of second sound pickup device 54, and a coordinate position (x3, y3, z3) of fifth sound pickup device 55 in the orthogonal coordinate system need to be ascertained in advance. However, these coordinate positions can be changed because first lens barrel 10 and second lens barrel 20 are movable. Therefore, an action for correcting the coordinate positions of the sound pickup devices is first performed. The action will be described later.

[Math. 1]

$$L1 = C \times T1 = \sqrt{(x1-x)^2 + (y1-y)^2 + (z1-z)^2} \quad \ldots\ldots(1)$$

[Math. 2]

$$L2 = C \times T2 = \sqrt{(x2-x)^2 + (y2-y)^2 + (z2-z)^2} \quad \ldots\ldots(2)$$

[Math. 3]

$$L3 = C \times T3 = \sqrt{(x3-x)^2 + (y3-y)^2 + (z3-z)^2} \quad \ldots\ldots(3)$$

In Equation (1) to Equation (3) described above, L1 indicates the distance from first ultrasound transmitter 370 to first sound pickup device 53, L2 indicates the distance from first ultrasound transmitter 370 to second sound pickup device 54, L3 indicates the distance from first ultrasound transmitter 370 to fifth sound pickup device 55, and C indicates the propagation speed of ultrasound in the air.

HMD 100 in the present embodiment includes imaging devices that capture images of the external world as first imaging device 51 and the second imaging device described above. Two or more such imaging devices enable the measurement of the distance to an object such as a controller. Specifically, a displacement of the same object in coordinate position between an image obtained by first imaging device 51 and an image obtained by the second imaging device is calculated by pattern matching or the like. The distances from the imaging devices to the object with respect to separation distances between the imaging devices, which have similitude relations with the relation of a focal distance of the imaging devices with respect to the displacement, can be obtained by calculation.

Here, the estimation of the relative position of the input device described above when the input device is used for making an input to HMD 100 will be described. FIG. 3B is a diagram for describing a position estimator of the head mounted display according to the embodiment. HMD 100 is provided with position estimator 81 illustrated in FIG. 3B that estimates the relative position of the input device. Position estimator 81 includes movement amount obtainer 82 and is connected to sound pickup device Mc and imaging device Cm. Sound pickup device Mc represents a concept that covers first sound pickup device 53 to the sixth sound pickup device described above. Imaging device Cm represents a concept that covers first imaging device 51 and the second imaging device described above. As described in the above example of the controller, the input devices are each provided with a transmitter that transmits ultrasound. Thus, the position of the transmitter can be estimated in the manner of what is called triangulation through the detection of ultrasound by a plurality of sound pickup devices included in HMD 100. Specifically, when the distances between a transmitter transmitting ultrasound, and one sound pickup device and another sound pickup device space away from each other by a predetermined distance (the distance between the one sound pickup device and the transmitter and the distance between the other sound pickup device and the transmitter) are known, the relative positions of the transmitter with respect to the one sound pickup device and the other sound pickup device is determined by calculation.

By applying this method, the transmitter can be found on the circumference of a circle of which an axis is a line connecting the one sound pickup device and the other sound pickup device. In addition, by performing the same method on still another sound pickup device and at least one of the one sound pickup device or the other sound pickup device, the relative position of the transmitter in a three-dimensional space can be estimated.

As described above, ultrasound is used here to determine the distance between a transmitter and a sound pickup device, from a transmission time of ultrasound from the transmitter and the sound pickup device. Examples of a method for determining the transmission time include counting pulses, measuring intensity, measuring phase difference, and the like, any one of which may be used. As described above, the sound pickup devices (first sound pickup device 53 to the fourth sound pickup device) are installed in first lens barrel 10 and second lens barrel 20. At the same time, since the distance between these two lens barrels is adjustable, the distances between the sound pickup devices can be changed, which may cause a failure to estimate the relative position of the transmitter correctly. In order to solve the problem, HMD 100 according to the present embodiment needs the determination of the distances between the sound pickup devices after the distance between the two lens barrels is adjusted.

For the determination, there are roughly two methods. First, one of the methods is a method of correcting the positional relationship among the sound pickup devices based on an amount of movement of at least one of first lens barrel 10 or second lens barrel 20 in the arrangement direction. Four sound pickup devices Mc including first sound pickup device 53 to the fourth sound pickup device, each of which is installed in any one of first lens barrel 10 or second lens barrel 20 that can be moved in the arrangement direction, are sound pickup devices Mc of which the relative positions can be moved. Further, since the direction of the movement is limited to the arrangement direction, when the amount of adjustment in the distance between first lens barrel 10 and second lens barrel 20 in the arrangement direction (hereinafter, referred to also as an amount of movement) can be known, the positional relationship among the sound pickup devices can be calculated by applying the theory described above.

In the present embodiment, the amount of movement is obtained by movement amount obtainer 82. For example, when user 99 inputs the distance between the two lens barrels to the system after adjusting the distance between the two lens barrels, movement amount obtainer 82 obtains an input amount of movement. The distance between the two lens barrels may be input by user 99 visually reading tick marks that are engraved on support member 41 for measuring the amount of movement. Similar tick marks may be engraved on adjusting member 32. Alternatively, the input may be made by user 99 measuring the amount of movement between the two lens barrels using an external instrument, for example, a measuring device such as a common ruler and measure, a measuring apparatus designed specially, or the like. In this case, a marker indicating a location suitable for the measurement may be attached to support member 41 or the like.

Alternatively, for example, movement amount obtainer 82 may measure an amount of operation of adjusting the distance between the two lens barrels by user 99 and obtain an amount of movement equivalent to the amount of operation. For example, movement amount obtainer 82 may obtain the result of measuring the rotation angle and the number of rotations of adjusting member 32 with a rotary encoder, a resistance element, or the like, may obtain the result of measuring the separation distance by detecting ultrasound from a transmitter that is provided in any one of the two lens barrels and transmits the ultrasound, with a sound pickup device provided in the other lens barrel, or may obtain the result of measuring the distance between the two lens barrels from a resistance value of a resistance element provided in support member 41. Alternatively, a light emitting element and a light receiving element may be provided in one of the two lens barrels, a reflecting plate that reflects light from the light emitting element may be provided in the other lens barrel, and movement amount obtainer 82 may obtain the results of measuring the distance between the two lens barrels by detecting reflected light.

The other of the methods is a method of correcting the positional relationship among the sound pickup devices based on the relative positions of a correction transmitter that are estimated by detecting correction ultrasound transmitted by the correction transmitter. In this method, ultrasound transmitted from the correction transmitter of which the relative positions with respect to sound pickup devices have been already known is detected, and the positional relationship among the sound pickup devices are adjusted in such a manner that the estimated relative positions of the correction transmitter match the positions already known, so as to optimize the values of the distances between the sound pickup devices used for the estimation. For example, the controller is placed at a predetermined position, an amount of revision by which the distances among the sound pickup devices should be revised is calculated from differences between the estimated positions of the controller and the positions of the placed controllers, and revision is to be made in such a manner as to bring the amount of revision to zero. In this case, the controller (particularly, the transmitter built in the controller) is used as the correction transmitter as it is. As an example in which the controller is similarly used as the correction transmitter, the revision can be performed by the same process as described above by making an input of the position at which the controller is placed as the relative position of the controller with respect to HMD 100. The above describes the example in which the revision is made with one controller placed at one location. However, the revision may be made with controllers placed at two or more positions to increase the accuracy of the revision. In particular, for HMD 100, an error of revision in the right-left direction, in which a change in the distance between the two lens barrels is likely to have influence, can be reduced in some deposition of the sound pickup devices Mc by making the revision with the controller being placed in at least one of a position diagonally forward of HMD 100 on the right (i.e., on the negative side in the X-axis direction and the negative side in the Y-axis direction) or a position diagonally forward of HMD 100 on the left (i.e., on the positive side in the X-axis direction and the negative side in the Y-axis direction). Note that since HMD 100 is configured such that the two lens barrels are moved in a bilateral symmetry, the value of the revision can be obtained with a sufficient accuracy even from any one of the right position or the left position.

The positions at which the controllers are placed can be indicated by HMD 100. For example, a scene of the external world of HMD 100 and an outline of the controller are displayed on display panel 39 in a superimposing manner, by which user 99 can perform the same correction as described above by placing the controller at the position at which the outline of the controller is displayed in the scene of the external world.

As an opposite approach to the above, user 99 wearing HMD 100 may move the head with the controllers being brought to a standstill in advance, so as to change the attitude of HMD 100 to an appropriate attitude so that outline matches the position of the controllers. The size of the controller in a displayed image can be used to measure the distance to the controller, that is, the distance to the transmitter. These may be combined to make the revision with higher accuracy.

Of sound pickup devices Mc, fifth sound pickup device 55 and the sixth sound pickup device are fixed to their positions. Therefore, the distances between the two sound pickup devices and the controller may be measured in the manner of triangulation, and then the revision may be made by estimating the positions of first sound pickup device 53 to the fourth sound pickup device based on these distances. In this case, the controller is placed on the front side of HMD 100, and the position of the controller is to be revised based on the distance to the controller measured using fifth sound pickup device 55 and the sixth sound pickup device and the distance between the two lens barrels estimated using first sound pickup device 53 to the fourth sound pickup device. Alternatively, a marginal position of the controller that can be estimated using fifth sound pickup device 55 and the sixth sound pickup device may be displayed on display panel 39 of HMD 100, an instruction to place the controller at the position may be given, and the revision may be made by estimating the positions of first sound pickup device 53 to the fourth sound pickup device.

In place of the controller, a correction jig may be used. That is, the correction transmitter need not be the transmitter included in the controller. In this example, HMD 100 is set to the jig, and an accurate revision is enabled with a correction transmitter of which the positional relationship with the jig is known. Alternatively, a correction ultrasound signal different from that of the controller may be used. This can further increase the accuracy of the correction. For example, the correction ultrasound signal is an ultrasound signal constituted by a single ultrasound. The ultrasound signal for the controller is made by combining a plurality of ultrasounds. Therefore, using an ultrasound signal different from the ultrasound signal for the controller enables the revision with higher accuracy. Note that, also in the example in which the revision is made with the controller, the controller may be configured to generate a single ultrasound in a correction mode so as to produce the same advantageous effect.

The above describes the example in which the correction transmitter separate from the controller is used. However, a configuration in which HMD 100 as well as the controller can be set to the correction jig enables the same correction using the controller.

The configuration illustrated in FIG. 13 in which one ultrasound transmitter (first ultrasound transmitter 370) is included in one controller (right operation terminal 300) enables the determination of the relative position between HMD 100 and the controller. FIG. 14 is a conceptual diagram for describing a method for detecting the attitude of the controller with respect to the head mounted display according to the embodiment.

As illustrated in FIG. 14, with a configuration in which one controller (right operation terminal 300) is provided with at least three ultrasound transmitters (e.g., first ultrasound transmitter 370, second ultrasound transmitter 380, and third ultrasound transmitter 390 that do not line up on the same line), the amounts of rotation (the orientation and the inclination) of the controller with respect to HMD 100 can be detected as in the determination of the relative position. With such a configuration, the orientation of a hand of user 99 holding the controller and the orientation of a virtual object can be ascertained.

In FIG. 14, first ultrasound transmitter 370, second ultrasound transmitter 380, and third ultrasound transmitter 390 generate ultrasounds of frequencies that are different from one another. The case in which the ultrasounds generated from first ultrasound transmitter 370, second ultrasound transmitter 380, and third ultrasound transmitter 390 are received by first sound pickup device 53 will be described.

In FIG. 14, as in FIG. 13, a given position of which the relative position with respect to HMD 100 is constant is defined as the origin of an orthogonal coordinate system, the right-left direction of user 99 wearing HMD 100 is defined as the X-axis direction of the orthogonal coordinate system, the front-rear direction of the user is defined as the Y-axis direction of the orthogonal coordinate system, and the up-down direction of the user is defined as the Z-axis direction of the orthogonal coordinate system.

Position detector 2903 calculates separation distances D1, D2, and D3 of first ultrasound transmitter 370, second ultrasound transmitter 380, and third ultrasound transmitter 390 of right operation terminal 300 with respect to first sound pickup device 53 by solving Equation (4) to Equation (6) shown below as simultaneous equations based on propagation time T'1 taken by the same ultrasound from first ultrasound transmitter 370 to reach first sound pickup device 53, propagation time T'2 taken by the same ultrasound from second ultrasound transmitter 380 to reach first sound pickup device 53, and propagation time T'3 taken by the same ultrasound from third ultrasound transmitter 390 to reach first sound pickup device 53. Based on the relationship among the calculated separation distances, position detector 2903 can detect the attitude (orientation and the direction) of right operation terminal 300.

Here, in the orthogonal coordinate system, the coordinate position of first sound pickup device 53 is defined as (x1, y1, z1), the coordinate position of first ultrasound transmitter 370 is defined as (p1, q1, r1), the coordinate position of second ultrasound transmitter 380 is defined as (p2, q2, r2), and the coordinate position of third ultrasound transmitter 390 is defined as (p3, q3, r3). C indicates the propagation speed of ultrasound in the air.

Note that a coordinate position (x1, y1, z1) of first sound pickup device 53 in the orthogonal coordinate system needs to be ascertained in advance.

[Math. 4]

$$D1 = C \times T'1 = \sqrt{(p1 - x1)^2 + (q1 - y1)^2 + (r1 - z1)^2} \quad \ldots\ldots (4)$$

[Math. 5]

$$D2 = C \times T'2 = \sqrt{(p2 - x1)^2 + (q2 - y1)^2 + (r2 - z1)^2} \quad \ldots\ldots (5)$$

[Math. 6]

$$D3 = C \times T'3 = \sqrt{(p3 - x1)^2 + (q3 - y1)^2 + (r3 - z1)^2} \quad \ldots\ldots (6)$$

Returning to FIG. 3A, first temple part 15 can be bent by first rear temple part 16 pivoting with respect to first front temple part 18 about an axis parallel to the Z axis in the figure. First temple part 15 is configured to be bent only in a direction of approaching second temple part 25 described later (counterclockwise as viewed from the positive side in the Z-axis direction) and is configured not to be pivoted in the opposite direction. This improves the ease of hanging first temple part 15 on ear 96 of user 99 (see FIG. 9 described later).

Second temple part 25 has a front end portion that is connected to the other end portion of support member 41 on the negative side in the X-axis direction and has a rear end portion that is to be hung on, for example, a right ear of user 99. Second temple part 25 is formed of resin and metal in combination. Second temple part 25 is formed by connecting second front temple part 28 on a front end side of second temple part 25 and second rear temple part 26 on a rear end side of second temple part 25 together pivotably via hinge portion 27. Hinge portion 27 includes a rod-shaped member that serves as a pivot shaft, a connection member that connects second front temple part 28 pivotably to the rod-shaped member, and a connection member that connects second rear temple part 26 pivotably to the rod-shaped member.

Second front temple part 28 is provided with cover 29 on its front end side. Cover 29 will be described later together with the description of cover 19. To second rear temple part 26, wiring 71 for connecting HMD 100 and external devices is connected.

Wiring 71 is connected to second temple part 25 and linked to internal wiring 67 that passes through second rear temple part 26, hinge portion 27, and second front temple part 28 (see FIG. 8C described later). Internal wiring 67 further passes through a space between first component 41a and second component 41b of support member 41, extending to second lens barrel 20 and first lens barrel 10. That is, internal wiring 67 is integrated with internal wiring 41c described above. Wiring 71 is therefore electrically connected to internal wiring 41c described above. Wiring 71 is supplied, from the external devices, with electric power for driving HMD 100 and signal information that represents content to be presented to user 99 with HMD 100.

Second temple part 25 can be bent by second rear temple part 26 pivoting with respect to second front temple part 28 about an axis parallel to the Z axis in the figure. Second temple part 25 is configured to be bent only in a direction of approaching first temple part 15 described above (clockwise as viewed from the positive side in the Z-axis direction) and is configured not to be pivoted in the opposite direction. This improves the ease of hanging second temple part 25 on ear 96 of user 99.

As illustrated in FIG. 1, first temple part 15 and second temple part 25 are curved in such a manner that rear ends of first temple part 15 and second temple part 25 approach each other. In other words, the temple parts are curved toward the inside of HMD 100 where the head of user 99 is located. This causes first temple part 15 and second temple part 25 to press the back of the head of user 99 inward and forward, pulling first lens barrel 10 and second lens barrel 20 such that first lens barrel 10 and second lens barrel 20 are pushed against the head of user 99. The curved shapes of first temple part 15 and second temple part 25 therefore inhibit worn HMD 100 from dropping off, contributing to improvement in wearability.

First eye cup 14 is a member in a barrel shape that is interposed between first lens barrel 10 and the head of user 99. First eye cup 14 is removably attached to first lens barrel 10. For example, in a case where HMD 100 is shared with a plurality of users 99, only replacement of first eye cup 14 inhibits indirect contact between users 99 via first lens barrel 10. First eye cup 14 is attached by inserting first eye cup 14 from an opening side of first main portion 11 of first lens barrel 10 toward the negative side in the Y-axis direction. As a result, first eye cup 14 projects outward of an opening end of first lens barrel 10 (i.e., toward user 99) and is provided along the opening end. As seen from the above, first eye cup 14, which is a main object that comes into contact with user 99, can be removed and, for example, washed. Therefore, HMD 100 can be kept clean without washing whole HMD 100.

Second eye cup 24 is a member in a barrel shape that is interposed between second lens barrel 20 and the head of user 99. Second eye cup 24 is removably attached to second lens barrel 20. For example, in a case where HMD 100 is shared with a plurality of users 99, only replacement of second eye cup 24 inhibits indirect contact between users 99 via second lens barrel 20. Second eye cup 24 is attached by inserting second eye cup 24 from an opening side of second main portion 21 of second lens barrel 20 toward the negative side in the Y-axis direction. As a result, second eye cup 24 projects outward of an opening end of second lens barrel 20 (i.e., toward user 99) and is provided along the opening end. As seen from the above, second eye cup 24, which is a main object that comes into contact with user 99, can be removed and, for example, washed. Therefore, HMD 100 can be kept clean without washing whole HMD 100.

Note that the barrel shapes of first eye cup 14 and second eye cup 24 described above are not necessarily a perfect barrel. For example, the barrel shapes may be in a curved plate shape or the like that is partly opened as viewed in its barrel axis direction. However, these eye cups desirably have a shape with which a space between HMD 100 and the eyes of user 99 are widely covered to deliver light from the displays of HMD 100 to the eyes of user 99 under reduced influence of outside light. For that reason, first eye cup 14 and second eye cup 24 according to the present embodiment are in barrel shapes that encompass the opening ends of first lens barrel 10 and second lens barrel 20, respectively.

With reference to FIG. 4, the functional configuration of HMD 100 according to the present embodiment will be described below.

FIG. 4 is a block diagram of the functional configuration of a display system including the head mounted display according to the embodiment.

To HMD 100, power source 91 and signal processing circuit 92 are connected via connector 75 and plug 75a. Power source 91 and signal processing circuit 92 are external devices connected to HMD 100.

Power source 91 is a device that supplies electric power for HMD 100 to perform various types of operation. Power source 91 is, for example, an AC-DC converter that converts household AC electric power to generate DC electric power of a voltage necessary for the operation of HMD 100. Power source 91 may be, for example, a battery that discharges accumulated electric power as DC electric power, a solar battery that supplies electric power generated from solar energy, or the like. Power source 91 as a battery may be built in HMD 100, or power source 91 as a solar battery may be attached to an outer surface of HMD 100. In HMD 100, the electric power supply may be performed by wireless transmission, without the use of plug 75a and connector 75.

Signal processing circuit 92 is a device that supplies, to HMD 100, image information that represents an image to be displayed through communication. Signal processing circuit 92 supplies the image information in the form of a digital signal but may supply the image information in the form of an analog signal. Alternatively, the image information may be stored in HMD 100, and the image may be displayed off-line, with plug 75a and connector 75 being disconnected. Alternatively, the image information generated in real time may be supplied successively to HMD 100 and displayed online, with the connection to plug 75a and connector 75 maintained. Alternatively, such image information may be also supplied through wireless communication.

As illustrated in FIG. 1, wiring 71 provided with, at its tip, connector 75 for performing at least one of the communication or the electric power supply described above is connected to second temple part 25 in the vicinity of the right ear of user 99 at the time of wearing HMD 100. Wiring 71 extends rearward of the right ear. For example, second rear temple part 26 of HMD 100 is connected to connector box 72 provided with connector 75 via wiring 71, which is designed to have a length of about 10 cm to 15 cm, from the viewpoint of positional graspability and handling.

[Connector Box]

FIG. 5 is a peripheral view of a connector box of the head mounted display according to the embodiment. Connector box 72 is an operator of HMD 100 provided with connector 75. Connector box 72 is provided with operation buttons that receive an input for operating HMD 100 from user 99. Specifically, as illustrated in the figure, connector box 72 is provided with volume turning-up operating button 73a, power switching button 73b, and volume turning-down operating button 73c.

When user 99 presses volume turning-up operating button 73a, the volume of sound being played back in accordance with the content displayed on HMD 100 is turned up based on the number of times of pressing volume turning-up operating button 73a. When user 99 presses power switching button 73b, on and off of the power source of HMD 100 are switched. That is, in order to start HMD 100 to operate, it is necessary to supply electric power via connector 75 and perform an operation of turning on the power source of HMD 100 by pressing power switching button 73b. When user 99 presses volume turning-down operating button 73c, the volume of sound being played back in accordance with the content displayed on HMD 100 is turned down based on the number of times of pressing volume turning-down operating button 73c.

HMD 100 has a configuration for emitting sound that is played back in accordance with the content displayed. For example, connector box 72 is provided with audio jack 74. Audio jack 74 is supplied with, for example, a signal of sound to be played back in accordance with the content that is acquired from signal processing circuit 92 via connector 75. When audio plug 74a linked to given earphones, speakers, or the like is inserted into audio jack 74, the sound to be played back in accordance with the content is emitted via the earphones, speakers, or the like.

Plug 75a connected to connector 75 may be, for example, a conversion plug. Plug 75a is a plug of a universal type that is capable of implementing various signals and electric power with a plug in one shape. However, there is a case where a signal of content or the like is output to HMD 100 from signal processing circuit 92 that is not capable of outputting a signal that conforms to such a plug shape. In this case, connector 75 may be connected to a conversion plug that is capable of receiving an input of a signal with a different plug shape and performs a signal conversion process on the signal and capable of outputting a signal converted for a shape conforming to the plug shape of plug 75a (i.e., conforming to connector 75).

Referring back to FIG. 4, the description of the functional configuration of HMD 100 will be resumed. The electric power and the image information supplied from the external devices are transferred to drive circuit 38 via internal wiring 41c and the like. In more detail, the image information is transferred to drive circuit 38 via processor 38a as illustrated in FIG. 4. Processor 38a is a processing device that processes image information for displaying on display device 30 of HMD 100 to convert the image information into an analog signal and performs various processes of image adjustment. Processor 38a is implemented by a processor, a memory, and a program for image processing that is stored in the memory.

In this manner, displaying an image on display device 30 based on the image information that reaches drive circuit 38 in the form of an analog signal. Specifically, display panel 39 is driven by drive circuit 38 and emit light representing an image. The light is concentrated by convex lens 40 and visually recognized with eye 95 of user 99.

Drive circuit 38 is a circuit device for driving display panel 39. Display panel 39 is a device such as a liquid crystal panel, an organic EL panel, and a micro LED panel. Note that, in place of display device 30 with such drive circuit 38 and display panel 39, a laser projector of a retinal projection type or the like may be used as display device 30.

[Eye Cup]

Next, the configuration of the eye cups according to the present embodiment will be described. FIG. 6 is a perspective view illustrating the eye cup of the head mounted display according to the embodiment. FIG. 7 is a top view illustrating the eye cup of the head mounted display according to the embodiment. FIG. 6 and FIG. 7 illustrate first eye cup 14. Second eye cup 24 has the same configuration as first eye cup 14 except that they are in a bilateral symmetry, and thus the description of second eye cup 24 will be omitted. In FIG. 6, the illustration of second member 14ii of first eye cup 14 is omitted.

In first lens barrel 10, first eye cup 14 inhibits direct contact between user 99 and first lens barrel 10. First eye cup 14 is configured such that one of the eyes of a user is covered with first eye cup 14. First eye cup 14 is interposed between user 99 and first lens barrel 10 and is configured in such a manner as to fill a space between user 99 and first lens barrel 10. First eye cup 14 is formed of a material that is elastically deformable and lightproof, such as rubber-like silicon resin. First eye cup 14 may be formed of a sponge-like resin material. Being lightproof and configured in such a manner as to fill the space between user 99 and first lens barrel 10, first eye cup 14 inhibits the viewability of an image from being decreased by the mixing of outside light into light that HMD 100 emits to cause user 99 to visually recognize the image.

As illustrated in the figure, first eye cup 14 according to the present embodiment is constituted by first member 14i and second member 14ii. First member 14i is made of, for example, silicon resin. First member 14i includes insertion part 14a in a shape of a barrel that is inserted into first lens barrel 10, particularly first main portion 11 and includes cup part 14b that extends outward of the barrel (toward the positive side in the Y-axis direction) from an end portion of first main portion 11 on its opening side and has a curved plate shape of a size that makes cup part 14b reach the head of user 99 at the time of wearing HMD 100. Cup part 14b makes a curve along a curve from the periphery of eye 95 to the temple of user 99. User 99 can visually recognize an image through first eye cup 14 via opening 14c that is circular and corresponds to the display provided inside first lens barrel 10.

Cup part 14b includes, on its contact end side on which cup part 14b comes into contact with user 99, surface 14d having a surface shape that faces the face of user 99 in such a manner as to increase the contact area of cup part 14b. Here, with cup part 14b, a space between surface 14d conforming to the head of user 99 and a connection end at which cup part 14b is connected to insertion part 14a is continuously covered. This gives cup part 14b a function of connecting first lens barrel 10 and the head of user 99 separated from each other to block the penetration of outside light into sight.

Between insertion part 14a and cup part 14b, a constricted portion having an outer circumference that is smaller than the outer circumference of insertion part 14a and the outer circumference of cup part 14b is formed. In other words, the constricted portion is a thin-walled portion at which the overall outer surface of first member 14i constricts. The formation of constricted portion gives first member 14i flexibility that allows first member 14i to be bent in an up-down direction and a right-left direction. Here, the flexibility of first member 14i in the up-down direction is useful because such flexibility has the effect of increasing wearability for user 99 without influencing the lateral parallax of HMD 100, but the flexibility of first member 14i in the right-left direction may influence the lateral parallax of HMD 100.

For that reason, first member 14i is formed with thick-wall portions that expand the outer circumference of first member 14i outward, at locations where the constricted portion intersects a line passing the center of the constricted portion in its height direction and extends in the arrangement direction (i.e., locations where the constricted portion intersects the arrangement plane). The thick-wall portions are formed integrally with first member 14i in such a manner as to bury the constricted portion on the arrangement plane. The thick-wall portions each have a taper shape of which the diameter increases as the taper shape extends toward the negative side of first lens barrel 10 in the Y-axis direction. Cup part 14b thus presses the thick-wall portions toward the negative side in the Y-axis direction on their one end sides on which their tapers are decreased in diameter, and the pressure of the pressing is supported on their other end sides on which the tapers are increased in diameter. That is, the supports are made small and more specified and function in such a manner as to promote a bend of cup part 14b in a direction separating from the supports. As a result, cup part 14b is configured to be bent easily in the up-down direction.

The thick-wall portions support cup part 14b from the insertion part 14a side in such a manner as to oppose a bend of first member 14i in the right-left direction. Further, in order to reinforce such supporting for cup part 14b, cup part 14b includes a flat portion that extends outward of the thick-wall portions along an XZ plane intersecting the central axis of first lens barrel 10 and is connected to cup part 14b. This forms a seesaw-like structure in which a bend of first member 14i is supported by the flat portion, thereby strongly inhibiting a bend in the right-left direction and facilitating a bend in the up-down direction while the shape of cup part 14b is maintained.

Here, surface 14d of first member 14i is formed with grooves 14e that extend in the Z-axis direction. In first eye cup 14 according to the present embodiment, a plurality of grooves 14e are formed on upper and lower sides of first eye cup 14 that sandwich opening 14c in the Z-axis direction as viewed in the Y-axis direction. On surface 14d, second member 14ii of first eye cup 14 is stuck. Second member 14ii is formed of, for example, urethane and comes into direct contact with the periphery of eye 95 of user 99.

Second member 14ii made of a material that less stimulates skin, such as urethane, improves the sense of wearing HMD 100. Here, by placing second member 14ii, grooves 14e are partially closed on its positive side in the Y-axis direction. Grooves 14e and second member 14ii form ventilation paths 14f through which the inside and outside of first eye cup 14 communicate with each other in the Z-axis direction. There are ventilation paths 14f provided corresponding in number to grooves 14e. For example, in the present embodiment, six ventilation paths 14f are provided on each of a side upper than opening 14c (the positive side in the Z-axis direction) and a side lower than opening 14c (the negative side in the Z-axis direction) as viewed in the Y-axis direction.

Some of the plurality of ventilation paths 14f are used for taking in air from the outside to the inside of the barrel of first eye cup 14. The others of the plurality of ventilation paths 14f are used for discharging air from the inside to the outside of the barrel of first eye cup 14. Ventilation paths 14f each taking in or discharging air in that manner can inhibit fogging caused by moisture that vaporizes from eye 95 of user 99 and the like from forming on an inner side of the barrel shape of first eye cup 14.

In the present embodiment, as viewed in the Y-axis direction, of ventilation paths 14f, ventilation paths 14f provided on the side upper than opening 14c (on the positive side in the Z-axis direction) take part in discharging air, and ventilation paths 14f provided on the side lower than opening 14c (on the negative side in the Z-axis direction) take part in taking in air. For example, inside the barrel shape of first eye cup 14, heat generated by user 99, the display of HMD 100, and the like builds up, thus warming air inside the barrel shape. In the case where HMD 100 is used in such an attitude that the positive side in the Z-axis direction faces upward in a vertical direction, the warmed air is naturally discharged to the outside through ventilation paths 14f provided on the positive side in the Z-axis direction. As a result, the inside of the barrel shape of first eye cup 14 that is placed negative pressure is supplied with air that is taken in through ventilation paths 14f provided on the negative side in the Z-axis direction. The repetition of the discharging and supplying air constantly ventilates the inside of the barrel shape of first eye cup 14, which is highly effective in inhibiting the formation of fogging.

Note that the provision of ventilation paths 14f in this manner is likely to let outside light enter the inside of first eye cup 14. In HMD 100 according to the present embodiment, ventilation paths 14f are disposed relatively close to eye 95 of user 99 in such a manner as to extend in a direction intersecting an optical axis of light representing an image from the display. As a result, the mixing of outside light into the light from the display is difficult, thus inhibiting a decrease in viewability of an image due to the formation of ventilation paths 14f.

Second member 14ii is not indispensable in HMD 100. That is, even in the case of first eye cup 14 only with first member 14i, grooves 14e can form ventilation paths with a contact surface in the vicinity of eye 95 of user 99. Therefore, the same advantageous effect can be produced. However, the configuration in which second member 14ii is interposed to reliably form ventilation paths 14f is useful because there is a case where ventilation paths 14f are closed by the deformation of skin on the contact surface (e.g., a case where the HMD is worn being strongly pressed, etc.).

[Built-in Sound Emitter]

Next, sound emitters that are built in first temple part 15 and second temple part 25 of HMD 100 will be described with reference to FIG. 8A to FIG. 8C and FIG. 9. FIG. 8A is a perspective view for describing how the first temple part of the head mounted display according to the embodiment is assembled. Part (a) of FIG. 8A illustrates first rear temple part 16 before being assembled (disassembled). Part (b) of FIG. 8A illustrates first rear temple part 16 after being assembled.

FIG. 8B is a sectional view illustrating a peripheral structure of the first rear temple part of the head mounted display according to the embodiment. FIG. 8B illustrates a cross section of first rear temple part 16 taken along line b-b in part (b) of FIG. 8A. FIG. 8C is a perspective view illustrating a first component of the second temple part of the head mounted display according to the embodiment. FIG. 9 is a diagram for describing a function of a sound emitter when the head mounted display according to the embodiment is used.

FIG. 8A, FIG. 8B, and FIG. 9 illustrate first temple part 15. Second temple part 25 has the same configuration as first temple part 15 except that they are in a bilateral symmetry, and thus the description of second temple part 25 will be omitted. In contrast, the structure described with reference to FIG. 8C is a structure specific to second temple part 25 and is not provided in first temple part 15.

As illustrated in part (a) of FIG. 8A, first rear temple part 16 of HMD 100 is constituted by two components: first component 16i and second component 16ii that are divided by a plane parallel to a YZ plane. First component 16i is a component that forms a portion of first rear temple part 16 on the positive side in the X-axis direction. Second component 16ii is a component that forms a portion of first rear temple part 16 on the negative side in the X-axis direction. First rear temple part 16 is fixed by engaging first component 16i and second component 16ii together in the X-axis direction, for example, by fitting a connection rod into connection holes. In this manner, first rear temple part 16 is formed as illustrate in part (b) of FIG. 8A.

Here, as illustrated in part (a) of FIG. 8A, sound emitter 61 is built in the first rear temple part. Sound emitter 61 is a module for emitting sound that is played back in accordance with the content described above. Specifically, sound emitter 61 receives an analog signal of which the output is adjusted via a digital/analog conversion circuit, an amplifier circuit, and the like not illustrated, based on sound played back in accordance with the content. Sound emitter 61 includes a vibration plate and a driving element for driving the vibrate plate. When the analog signal is input to the driving element, the driving element vibrates the vibration plate with vibration based on the analog signal. As a result, sound emitter 61 produces vibration based on the sound played back in accordance with the content, thereby outputting sound waves from the vibration. When the sound waves from the vibration propagate through air to reach ear 96, user 99 perceive the sound waves.

In the case where sound waves are produced by vibrating the vibration plate, one of surfaces of the vibration plate produces a vibration in phase, and the other surface produces a vibration in anti-phase. Although both vibrations produces audible sounds, if a sound wave by a vibration in phase (hereinafter, referred to also as an in-phase wave) and a sound wave by a vibration in anti-phase (hereinafter, referred to also as an anti-phase wave) are emitted simultaneously, the sound waves cancel each other, failing to produce an audible sound. It is therefore necessary to separate the in-phase wave and the anti-phase wave from each other and cause only one of the sound waves to be perceived by user 99. In HMD 100 according to the present embodiment, a hole for taking out one of the in-phase wave or the anti-phase wave and a hole for taking out the other are disposed away from each other for taking out sound waves by vibrations to the outside from sound emitter 61 built in first rear temple part 16.

Specifically, as illustrated in part (b) of FIG. 8A, first rear temple part 16 is provided with in-phase hole 63 and anti-phase hole 62 that is disposed away from in-phase hole 63. Note that in-phase hole 63 extends to both first component 16i and second component 16ii and is constituted by half hole 63i that is formed in first component 16i and half hole 63ii that is formed in second component 16ii.

For an aesthetic point of view of HMD 100, in-phase hole 63 and anti-phase hole 62 are provided, for example, on a lower surface side of first rear temple part 16 (the negative side in the Z-axis direction). Referring to part (a) of FIG. 8A, of the vibration plate (a circular plate at the center of sound emitter 61) forming sound emitter 61, a surface on the front side of the paper faces a space continuous to in-phase hole 63 and is a surface that outputs an in-phase wave. In contrast, of the vibration plate forming sound emitter 61, a surface on the back side of the paper faces a space continuous to anti-phase hole 62. Further, sound emitter 61 is provided, in the vicinity of the vibration plate, with a partition wall for inhibiting an in-phase wave and an anti-phase wave from interfering with each other. The partition wall is constituted by a plate member that is parallel to the vibration plate and for isolating both main surfaces of the vibration plate from each other and a wall member that extends from the plate member in a direction perpendicular to a surface of the plate to separate a space from the vibration plate to in-phase hole 63 and a space from the vibration plate to anti-phase hole 62 from each other.

The space continuous to in-phase hole 63 is a relatively small space, and thus an in-phase wave from the vibration plate is taken out through in-phase hole 63 immediately after generated. In contrast, the space continuous to anti-phase hole 62 is relatively large, and thus an anti-phase wave from the vibration plate heads to anti-phase hole 62 for a while through the space after generated and is then taken out through anti-phase hole 62.

As illustrated in FIG. 9, in-phase hole 63 is provided at a position close to ear 96 of user 99 in an attitude when user 99 wears HMD 100. In contrast, anti-phase hole 62 is provided at a position far from ear 96 of user 99 in the attitude when user 99 wears HMD 100. Further, the hole-axis direction of in-phase hole 63 is set to be rearward and downward. In contrast, the hole-axis direction of anti-phase hole 62 is set to be downward.

As seen from the above, by providing in-phase hole 63 in the vicinity of ear 96 of user 99 and providing anti-phase hole 62 at a position far from in-phase hole 63 and ear 96 of user 99 in first rear temple part 16, the interference between an in-phase wave and an anti-phase wave is inhibited. In addition, in part (a) of FIG. 8A, by providing in-phase hole 63 in a direction heading to ear 96 of user 99 and providing anti-phase hole 62 in a direction different from the direction of in-phase hole 63, the interference between an in-phase wave and an anti-phase wave is further inhibited.

Here, as illustrated in FIG. 8B, a space formed between second component 16ii and sound emitter 61 is configured to increase in its cross-sectional area as the space approaches in-phase hole 63 of first rear temple part 16. Specifically, an inner wall of second component 16ii facing sound emitter 61 forms thick-wall portion 69. With the configuration of thick-wall portion 69, the cross-sectional area of the space is regulated. In more detail, on the upper side of the paper in FIG. 8B (i.e., at positions far from in-phase hole 63), the inner wall of second component 16ii projects in such a manner as to extend toward sound emitter 61 to form a thickest portion of thick-wall portion 69. The thickness of thick-wall portion 69 gradually decreases from the thickest portion toward in-phase hole 63, thus forming inclined surface 69a that is inclined with respect to the surface of the vibration plate of sound emitter 61. As a result, when sound output from sound emitter 61 is reflected by inclined surface 69a and passes though in-phase hole 63, the high-frequency properties of the sound are flattened. Therefore, sound of higher quality can be provided to user 99.

As described above, internal wiring 67 is disposed in second temple part 26. Here, if such internal wiring 67 is present as being bare in an internal space of second rear temple part 26 continuous to anti-phase hole 62, acoustic resistance is inappropriately increased.

As illustrated in FIG. 8C, in the present embodiment, partition wall 68 for inhibiting internal wiring 67 from being bare is provided in the internal space of second rear temple part 26 continuous to anti-phase hole 62. The figure illustrates partition wall 68 provided on first component 26i. Partition wall 68 is in contact with an inner wall surface of a second component of second rear temple part 26 not illustrated, thereby isolating the internal space of second rear temple part 26 continuous to anti-phase hole 62 and a space for disposing internal wiring 67 from each other.

In this manner, internal wiring 67 is disposed in the space isolated by partition wall 68 and internal wiring 41c and wiring 71 are electrically connected. This makes an anti-phase wave output by sound emitter 61 resist being subjected to the acoustic resistance by internal wiring 67. HMD 100 capable of outputting sound of high quality is thus provided.

As illustrated in FIG. 9, when user 99 wears HMD 100, ear 96 of user 99 is rearward and downward of in-phase hole 63. Therefore, an in-phase wave taken out through in-phase hole 63 easily reaches ear 96 of user 99 in the hole-axis direction of in-phase hole 63. In contrast, an anti-phase wave taken out through anti-phase hole 62 heads in a direction different from a direction to ear 96 of user 99 and is thus not likely to reach ear 96 of user 99. In this manner, HMD 100 is capable of cause user 99 to perceive sound played back in accordance with the content by taking out an in-phase wave and an anti-phase wave separately.

Note that a portion of first rear temple part 16 where sound emitter 61 is disposed is expanded compared with the other portions so that a large vibration plate can be accommodated. The provision of the expanded portion produces the effect of specifying a portion at which user 99 should hang first temple part 15. In addition, a configuration in which the in-phase wave and the anti-phase wave are interchanged is possible. That is, the surface of sound emitter 61 outputting an in-phase wave and the surface of sound emitter 61 outputting an anti-phase wave may be interchanged, an anti-phase hole may be provided in place of in-phase hole 63, and an in-phase hole may be provided in place of anti-phase hole 62.

[Retaining Mechanism]

FIG. 10 is a top view for describing retaining mechanisms of the head mounted display according to the embodiment. The top view of FIG. 10 illustrates HMD 100 as viewed from the positive side in the Z-axis direction. Here, in HMD 100 illustrated in FIG. 10, retaining member 65 is illustrated.

In HMD 100 according to the present embodiment, the weight of first lens barrel 10 and second lens barrel 20 forms a majority of the weight of entire HMD 100. In this case, with the configuration that makes HMD 100 be hung only on ear 96 of users 99, HMD 100 may be pulled by the weight of a front part of HMD 100 to drop off in some conditions of use. Therefore, the example illustrated in FIG. 10 illustrates a configuration that inhibits HMD 100 from dropping off even in such a case.

Specifically, HMD 100 is provided with retaining mechanism 16a and retaining mechanism 26a that are capable of connecting retaining member 65 that pulls first rear temple part 16 and second rear temple part 26 in such a manner as to shorten the distance between first rear temple part 16 and second rear temple part 26.

Retaining mechanism 16a is an umbrella-like protrusion that is formed at one of end portions of first rear temple part 16 that is on a side opposite to the first lens barrel 10 side. Retaining member 65 is a rubber-like member having an elongated shape and provided with a plurality of holes at its one end portion and the other end portion. One of the holes at the one end portion of retaining member 65 is connected to retaining mechanism 16a. The hole of retaining member 65 is connected to retaining mechanism 16a by passing the umbrella portion of the protrusion to be engaged with the grip portion of the protrusion. The hole of retaining member 65 is thereby hooked on the umbrella portion to resist being unhooked from the grip portion.

Retaining mechanism 26a is an umbrella-like protrusion that is formed at one of end portions of second rear temple part 26 that is on a side opposite to the second lens barrel 20 side. One of the holes at the other end portion of retaining member 65 is connected to retaining mechanism 26a. The hole of retaining member 65 is connected to retaining mechanism 26a by passing the umbrella portion of the protrusion to be engaged with the grip portion of the protrusion. The hole of retaining member 65 is thereby hooked on the umbrella portion to resist being unhooked from the grip portion.

Retaining member 65 acts to pull retaining mechanism 16a and retaining mechanism 26a toward each other via the holes formed at the one end portion and the other end portion. At this time, when strong force is applied, rubber properties of retaining member 65 allow retaining mechanism 16a and retaining mechanism 26a to be drawn apart from each other. This causes retaining mechanism 16a and retaining mechanism 26a to be pulled toward each other moderately. As retaining mechanism 16a and retaining mechanism 26a are pulled toward each other, first rear temple part 16 and second rear temple part 26 are pulled toward each other. As a result, first rear temple part 16, retaining member 65, and second rear temple part 26 cause HMD 100 to be retained on the back of the head of user 99, thus inhibiting the dropping off of HMD 100 as described above.

[Advantageous Effects etc.]

As described above, the display apparatus (HMD 100) according to the present embodiment includes: first lens barrel 10 that is in a shape of a bottomed barrel and includes, as a bottom portion, a first display device that displays a first image; second lens barrel 20 that is in a shape of a bottomed barrel and includes, as a bottom portion, a second display device that displays a second image; and support member 41 that is elongated in an arrangement direction in which first lens barrel 10 and second lens barrel 20 are arranged, and that, by passing through first lens barrel 10 and second lens barrel 20 in the arrangement direction, supports at least one of first lens barrel 10 or second lens barrel 20 to allow the at least one of first lens barrel 10 or second lens barrel 20 to move in the arrangement direction.

With such HMD 100, first lens barrel 10 and second lens barrel 20 can be supported by support member 41 passing through first lens barrel 10 and second lens barrel 20. First lens barrel 10 and second lens barrel 20 can be retained at the same time only by retaining support member 41. Here, since support member 41 passes through and supports first lens barrel 10 and second lens barrel 20, support member 41 extends not only between first lens barrel 10 and second lens barrel 20 but also outward of first lens barrel 10 and second lens barrel 20 in the arrangement direction. Support member 41 therefore can be retained from the outside of first lens barrel 10 and second lens barrel 20 in the arrangement direction. In this manner, support member 41 can be easily supported, and first lens barrel 10 and second lens barrel 20 are retained at the same time by the support member that is easily supported. At this time, at least one of the first lens barrel or second lens barrel 20 can be moved on support member 41 in the arrangement direction. As a result, the distance between first lens barrel 10 and second lens barrel 20 can be changed. This makes it possible to adjust the position of second lens barrel 20 with respect to first lens barrel 10 or the position of first lens barrel 10 with respect to second lens barrel 20 for user 99. HMD 100 having the above-described effects in combination and being configured more appropriately can be provided.

HMD 100 according to the present embodiment includes, for example: first lens barrel 10 that is in a shape of a bottomed barrel and includes, as a bottom portion, a first display device that displays a first image; second lens barrel 20 that is in a shape of a bottomed barrel and includes, as a bottom portion, a second display device that displays a second image; and support member 41 that is elongated in an arrangement direction in which first lens barrel 10 and second lens barrel 20 are arranged, and that, by passing through first lens barrel 10 and second lens barrel 20 in the arrangement direction, supports at least first lens barrel 10 to allow the at least first lens barrel 10 to move in the arrangement direction, wherein first lens barrel 10 includes a pressing mechanism that presses support member 41 in a direction intersecting the arrangement direction, toward an inner surface of first through-hole 11a provided in first lens barrel 10 through which support member 41 passes, and the pressing mechanism includes an adjuster that allows adjustment of pressing force for pressing support member 41.

In supporting support member 41, when first lens barrel 10 rotates about an axis in the arrangement direction with respect to support member 41, and second lens barrel 20 rotates about an axis in the arrangement direction with respect to support member 41, the barrel axis of first lens barrel 10 and the barrel axis of second lens barrel 20 can be made nonparallel. With the above-described configuration, the rotation of first lens barrel 10 with respect to support member 41 and the rotation of second lens barrel 20 with respect to support member 41 is strongly inhibited, thus strongly inhibiting the barrel axes from becoming nonparallel. As a result, images can be displayed more appropriately.

In addition, in the production of HMD 100, the degree of precision in designing support member 41, first through-hole 11a of first lens barrel 10, and second through-hole 21a of second lens barrel 20 can be decreased. That is, when, compared to the size of the cross sectional shape of support member 41 perpendicular to the arrangement direction, the sizes of the corresponding cross sectional shapes of first through-hole 11a and second through-hole 21a are larger, the degree of fluctuations of the sizes is tolerable within a predetermined range within which fastening of screw member 43 is enabled. Therefore, even in the case where a manufacturing error occurs within the predetermined range, appropriate HMD 100 can be configured. That is, the number of members that are lost due to the manufacturing error can be reduced, and HMD 100 can be produced at lower cost. As seen from the above, according to the present embodiment, HMD 100 configured more appropriately can be provided.

For example, HMD 100 may further include adjusting member 32 that is connected to first lens barrel 10 and second lens barrel 20, and adjusts a distance between first lens barrel 10 and second lens barrel 20 in the arrangement direction by changing at least either (i) relative positions of adjusting member 32 and first lens barrel 10 or (ii) relative positions of adjusting member 32 and second lens barrel 20.

Accordingly, the distance between first lens barrel 10 and second lens barrel 20 can be adjusted only by handling adjusting member 32 for the adjustment. The position of second lens barrel 20 with respect to first lens barrel 10 or the position of first lens barrel 10 with respect to second lens barrel 20 can be adjust more easily for user 99. Further, since adjusting member 32 connects first lens barrel 10 and second lens barrel 20 separately from support member 41, the non-parallelism between the barrel axis of first lens barrel 10 and the barrel axis of second lens barrel 20 is inhibited. As a result, images can be displayed more appropriately. Therefore, HMD 100 configured more appropriately can be provided.

For example, HMD 100 may further include temple parts (first temple part 15 and second temple part 25) respectively connected to two end portions of support member 41 in the arrangement direction. First lens barrel 10 may include first sound pickup device 53 and second sound pickup device 54 each of which detects an ultrasound, the second lens barrel may include a third sound pickup device and a fourth sound pickup device each of which detects an ultrasound, and the temple parts may respectively include fifth sound pickup device 55 and a sixth sound pickup device each of which detects an ultrasound.

Accordingly, it is possible to achieve the disposition of sound pickup devices that enables an ultrasound transmitter to be located efficiently within the restrictions on an installation space of HMD 100. Therefore, HMD 100 configured more appropriately can be provided.

For example, HMD 100 may further include temple parts (first temple part 15 and second temple part 25) respectively connected to two end portions of support member 41 in the arrangement direction, and the temple parts may respectively include first imaging device 51 and a second imaging device each of which is provided at an end portion of a corresponding one of the temple parts connected to support member 41 and captures an image.

Accordingly, it is possible to achieve the disposition of imaging devices that enables the attitude of HMD 100 to be detected efficiently within the restrictions on an installation space of HMD 100. Therefore, HMD 100 configured more appropriately can be provided.

In addition, for example, fixing member 411 that fixes the relative position of adjusting member 32 with respect to support member 41 in the arrangement direction may be further provided.

Accordingly, the relative position between support member 41 and adjusting member 32 in the arrangement direction can be fixed. In the case where first lens barrel 10 and second lens barrel 20 are retained on user 99 via support member 41, if first lens barrel 10 and second lens barrel 20 moves with respect to support member 41, it is possible that the positions of the lens barrels do not fit to the position of eyes 95 of user 99 even when the distance between first lens barrel 10 and second lens barrel 20 is appropriate. With the above-described configuration, when the distance between first lens barrel 10 and second lens barrel 20 is adjusted, first lens barrel 10 and second lens barrel 20 are inhibited from moving on support member 41 together with adjusting member 32. That is, even when first lens barrel 10 and second lens barrel 20 are retained on user 99 via support member 41, their lens barrels can be retained at their appropriate positions. Therefore, HMD 100 configured more appropriately can be provided.

For example, HMD 100 according to the present embodiment includes: first lens barrel 10 that is in a shape of a bottomed barrel and includes, as a bottom portion, a first display device that displays a first image; second lens barrel 20 that is in a shape of a bottomed barrel and includes, as a bottom portion, a second display device that displays a second image; support member 41 that supports first lens barrel 10 and second lens barrel 20; and an eye cup (first eye cup 14 and second eye cup 24) that is in a barrel shape and is provided at an open end of each of first lens barrel 10 and second lens barrel 20, wherein the eye cup includes two or more ventilation paths 14f through which inside and outside of the eye cup communicate with each other in an intersecting direction that intersects (i) a barrel axis direction of first lens barrel 10 and second lens barrel 20 and (ii) an arrangement direction in which first lens barrel 10 and second lens barrel 20 are arranged.

In such HMD 100, air can be discharged from the space formed between the head of user 99 and each lens barrel to the outside via some of two or more ventilation paths 14f, and air can be supplied from the outside via the others of ventilation paths 14f. By circulating the air in this manner, an increase in humidity in the space can be inhibited, and thus, the occurrence of fogging in the optical system such as a lens between the display and the eye can be inhibited. Therefore, HMD 100 configured more appropriately, inhibiting the occurrence of fogging, can be provided.

For example, the eye cup (first eye cup 14 and second eye cup 24) may include first member 14i and second member 14ii, first member 14i including a portion attached to a corresponding lens barrel of first lens barrel 10 and second lens barrel 20, second member 14ii being stuck to surface 14d of first member 14i opposite to a surface where the corresponding lens barrel is provided, and each of two or more ventilation paths 14f may be a hole through which the inside and the outside of the eye cup communicate with each other in the intersecting direction, and include: groove 14e provided on surface 14d of first member 14i and extending in the intersecting direction; and a lid portion that closes a part of groove 14e when second member 14ii is stuck to first member 14i.

Accordingly, the contact properties of the eye cups can be improved, and ventilation paths 14f can be kept more clearly. Therefore, HMD 100 configured more appropriately with an improved effect of inhibiting the occurrence of fogging can be provided.

For example, HMD 100 according to the present embodiment includes, for example: first lens barrel 10 that is in a shape of a bottomed barrel and includes, as a bottom portion, a first display device that displays a first image; second lens barrel 20 that is in a shape of a bottomed barrel and includes, as a bottom portion, a second display device that displays a second image; support member 41 that supports first lens barrel 10 and second lens barrel 20; and temple parts (first temple part 15 and second temple part 25) which are provided corresponding to first lens barrel 10 and second lens barrel 20 and each of which includes sound emitter 61 that emits sound.

Such HMD 100 is capable of emitting, by only itself, sound played back in accordance with the content displayed. In HMD 100, sound is emitted in the temple parts, which are disposed at positions close to ears 96 of user 99, and thus the sound is sufficiently audible even in the case of low power. As a result, the power consumption for emitting sound can be reduced. Therefore, HMD 100 capable of outputting an image and sound and configured more appropriately can be provided.

For example, a sound emitter may be built in each of the temple parts (first temple part 15 and second temple part 25), and each temple part may include in-phase hole 63 through which an in-phase wave generated by sound emitter 61 is taken out to the outside of the temple part and anti-phase hole 62 through which an anti-phase wave generated by sound emitter 61 is taken out to the outside of the temple part and which is disposed away from in-phase hole 63.

Accordingly, the interference between an in-phase wave and an anti-phase wave can be inhibited. If an in-phase wave and an anti-phase wave interfere with each other, the interference reduces the amplitudes of the waves, and it is thus possible that user 99 cannot listen to emitted sound appropriately. With the above-described configuration, HMD 100 that is capable of inhibiting the interference between an in-phase wave and an anti-phase wave and capable of emitting sound that user 99 can listen to appropriately can be provided. Therefore, HMD 100 capable of emitting sound appropriately audible and configured more appropriately can be provided.

HMD 100 according to the present embodiment includes, for example: first lens barrel 10 that is in a shape of a bottomed barrel and includes, as a bottom portion, a first display device that displays a first image; second lens barrel 20 that is in a shape of a bottomed barrel and includes, as a bottom portion, a second display device that displays a second image; support member 41 that supports first lens barrel 10 and second lens barrel 20; and temple parts (first temple part 15 and second temple part 25) that are provided corresponding to first lens barrel 10 and second lens barrel 20 and include, at their end portions on a side opposite to the first lens barrel 10 side or the second lens barrel 20 side, retaining mechanisms 16a and 26a capable of being connected to retaining member 65.

There is a case where HMD 100 is used in such a manner that only hanging the temple parts on ears 96 of user 99 cannot deal with the lens barrel parts that are relatively heavy. In HMD 100 as described above, by connecting first temple part 15 and second temple part 25 to each other with retaining member 65, an annular shape can be formed together with support member 41 that passes through first lens barrel 10 and second lens barrel 20. The head of user 99 is placed inside the annular shape, and thus the head of user 99 is unlikely to be separated from the annular shape. That is, HMD 100 is unlikely to drop off from the head of user 99. Further, when retaining member 65 is formed of a rubber-like member, the annular shape expands or contracts in accordance with the shape of the head of user 99, and thus HMD 100 having higher wearability can be provided. Therefore, HMD 100 configured more appropriately can be provided.

For example, HMD 100 may further include position estimator 81 that, based on (i) an ultrasound detected by two or more sound pickup devices Mc among first sound pickup device 53, second sound pickup device 54, the third sound pickup device, the fourth sound pickup device, fifth sound pickup device 55, and the sixth sound pickup device, and (ii) a positional relationship between two or more sound pickup devices Mc, estimates a relative position of a transmitter (first ultrasound transmitter 370 etc.) that emits the ultrasound relative to two or more sound pickup devices Mc.

Accordingly, the relative position of a transmitter generating ultrasound can be estimated with two or more sound pickup devices Mc selected from six sound pickup devices Mc.

For example, position estimator 81 may: correct the positional relationship between two or more sound pickup devices Mc; and estimate the relative position of the transmitter (first ultrasound transmitter 370 etc.) relative to two or more sound pickup devices Mc, based on the ultrasound detected by two or more sound pickup devices Mc and a corrected positional relationship between two or more sound pickup devices Mc.

Accordingly, in the estimation of the relative position of a transmitter (first ultrasound transmitter 370 etc.) based on the positional relationship between two or more sound pickup devices Mc, the positional relationship between two or more sound pickup devices Mc is corrected, and then the estimation based on the corrected positional relationship can be performed. In particular, in HMD 100, the relative positions of first lens barrel 10 equipped with some of sound pickup devices Mc and second lens barrel 20 equipped with others of sound pickup devices Mc, and the temple parts (first temple part 15 and second temple part 25) connected to both ends of support member 41 and equipped with the others of sound pickup devices Mc are changed with the movement of first lens barrel 10 along support member 41. Therefore, the positional relationship among sound pickup devices Mc in first lens barrel 10, second lens barrel 20, and the temple parts after the positions are changed is corrected, and then the estimation based on the corrected positional relationship is performed. Thus, the relative position of the transmitter can be estimated accurately irrespective of the relative positions among first lens barrel 10, second lens barrel 20, and the temple parts.

For example, position estimator 81 may correct the positional relationship between two or more sound pickup devices Mc, based on an amount of movement of at least one of first lens barrel 10 or second lens barrel 20 in the arrangement direction.

Accordingly, the positional relationship among sound pickup devices Mc in first lens barrel 10, second lens barrel 20, and the temple parts after their positions are changed can be corrected from the amount of movement when first lens barrel 10 and second lens barrel 20 are moved, and the relative position of the transmitter can be estimated more accurately based on the corrected positional relationship.

For example, HMD 100 may further include adjusting member 32 that is connected to first lens barrel 10 and second lens barrel 20, and adjusts a distance between first lens barrel 10 and second lens barrel 20 in the arrangement direction by changing at least either (i) relative positions of adjusting member 32 and first lens barrel 10 or (ii) relative positions of adjusting member 32 and second lens barrel 20, and the amount of movement may be determined based on an amount of adjustment in the distance between first lens barrel 10 and second lens barrel 20 in the arrangement direction by adjusting member 32.

Accordingly, the relative positions of first lens barrel 10 and second lens barrel 20 can be changed by adjusting the distance between first lens barrel 10 and second lens barrel 20 with adjusting member 32. That is, first lens barrel 10 and second lens barrel 20 are moved in accordance with an amount of adjustment using adjusting member 32. Then, the amount of adjustment by adjusting member 32 can be converted into the amounts of movement of first lens barrel 10 and second lens barrel 20. From the amount of movement obtained in this manner, the positional relationship among sound pickup devices Mc in first lens barrel 10, second lens barrel 20, and the temple parts after their positions are changed can be corrected, and the relative position of the transmitter can be estimated more accurately based on the corrected positional relationship.

For example, position estimator 81 may correct the positional relationship between two or more sound pickup devices Mc, based on a relative position of a correction transmitter estimated by detecting a correction ultrasound emitted from the correction transmitter.

Accordingly, the positional relationship between two or more sound pickup devices Mc can be corrected with the correction transmitter.

For example, the temple parts may respectively include imaging devices Cm (first imaging device 51 and a second imaging device) each of which is provided at an end portion of a corresponding one of the temple parts connected to support member 41 and captures an image, and the relative position of the correction transmitter estimated by detecting the correction ultrasound emitted from the correction transmitter may be revised according to a position of the correction transmitter that is based on images captured by imaging devices Cm, and the positional relationship between the two or more sound pickup devices may be corrected based on a revised relative position of the correction transmitter.

Accordingly, the estimated relative position of the correction transmitter can be revised from the position of the correction transmitter based on images captured by imaging devices Cm. That is, the positional relationship between two or more sound pickup devices Mc can be corrected based on the revised relative position of the correction transmitter, which is more accurate.

For example, position estimator 81 may correct the positional relationship between two or more sound pickup devices Mc in response to a distance between first lens barrel 10 and second lens barrel 20 in the arrangement direction changing from a first distance to a second distance different from the first distance.

Accordingly, the correction can be performed at a timing at which the distance between first lens barrel 10 and second lens barrel 20 in the arrangement direction is changed, that is, a timing at which the relative positions of two or more sound pickup devices Mc are changed.

[Other Embodiments]

The embodiment and the like have been described above. However, the present disclosure is not limited to the above embodiment and the like.

In the above embodiment and the like, the constituent elements constituting the HMD are exemplified. However, the functions of the constituent elements included in the HMD may be allocated in any manner to a plurality of elements constituting the HMD.

The configurations of the connector box, the eye cup, the built-in sound emitter, and the retaining mechanism described above are effective not only to the HMD described in Basic Configuration but also to an HMD of any type. For example, FIG. 11 illustrates a head mounted display according to another embodiment.

HMD 100z illustrated in FIG. 11, first temple part 15z is directly connected to first lens barrel 10z, and second temple part 25z is directly connected to second lens barrel 20z. In HMD 100z, first lens barrel 10z and second lens barrel 20z are supported each other by support member 41z of a non-penetrating type. Even in the case of HMD 100z in the figure, an HMD configured more appropriately can be provided by applying at least one of the configurations of the connector box, the eye cup, the built-in sound emitter, and the retaining mechanism described above to HMD 100z.

The present disclosure also encompasses other forms achieved by making various modifications conceivable to those skilled in the art to the embodiments etc. and forms implemented by freely combining constituent elements and functions of the embodiments etc. without departing from the essence of the present disclosure.

[Industrial Applicability]

The present disclosure is useful as a wearable display apparatus such as a head mounted display.

[Reference Signs List]

10, 10z first lens barrel
11 first main portion
11a first through-hole
12 first sub portion
13 first panel
14 first eye cup
14a insertion part
14b cup part
14c opening
14d surface
14e groove
14f ventilation path
14i first member
14ii second member
15, 15z first temple part
16 first rear temple part
16a, 26a retaining mechanism
16i, 26i, 41a first component
16ii, 41b second component
17, 27 hinge portion
18 first front temple part
19, 29 cover
20, 20z second lens barrel
21 second main portion
21a second through-hole
22 second sub portion
23 second panel
24 second eye cup
25, 25z second temple part
26 second rear temple part
28 second front temple part

30 display device

31 adjusting mechanism

32 adjusting member

32a knob member

33, 34 thread portion

35, 36 threaded hole

38 drive circuit

38a processor

39 display panel

40 convex lens

41, 41z support member

41c internal wiring

411 fixing member

42 frame

42a frame through-hole

42b threaded hole

43 screw member

44 pressure dispersion plate

45 slider

45a recessed portion

45b, 45c projecting portion

46, 47 member

48, 49 adjustment hole

51 first imaging device

52 infrared light source

53 first sound pickup device

54 second sound pickup device

55 fifth sound pickup device

61 sound emitter

62 anti-phase hole

63 in-phase hole

63i half hole

63ii half hole

65 retaining member

67 internal wiring

68 partition wall

69 thick-wall portion

69a inclined surface

71 wiring

72 connector box

73a volume turning-up operating button

73b power switching button

73c volume turning-down operating button

74 audio jack

74a audio plug

75 connector

75a plug

81 position estimator

82 movement amount obtainer

91 power source

92 signal processing circuit

95 eye

96 ear

99 user

100 HMD (display apparatus)

150, 280, 340, 440 storage

160, 270, 350, 450 communicator

170, 360, 460 operation input receiver

180 ultrasound receiver
190 image display device
200 control device
290 CPU
300 right operation terminal
370 first ultrasound transmitter
380 second ultrasound transmitter
390 third ultrasound transmitter
400 left operation terminal
470 fourth ultrasound transmitter
480 fifth ultrasound transmitter
490 sixth ultrasound transmitter
1801 pulse outputter
1802 first sound pickup device
1803 second sound pickup device
1804 third sound pickup device
1805 fourth sound pickup device
1806 fifth sound pickup device
1807 sixth sound pickup device
1901 display driver
1902 display element
1903 lens
2901 display controller
2902 operation recognizer
2903 position detector
2904 ultrasound controller
Cm imaging device
Mc sound pickup device

## Claims

1. A display apparatus comprising:

    a first lens barrel that is in a shape of a bottomed barrel and includes, as a bottom portion, a first display device that displays a first image;
    a second lens barrel that is in a shape of a bottomed barrel and includes, as a bottom portion, a second display device that displays a second image;
    a support member that is elongated in an arrangement direction in which the first lens barrel and the second lens barrel are arranged, and that, by passing through the first lens barrel and the second lens barrel in the arrangement direction, supports at least one of the first lens barrel or the second lens barrel to allow the at least one of the first lens barrel or the second lens barrel to move in the arrangement direction; and
    temple parts respectively connected to two end portions of the support member in the arrangement direction,
    wherein the first lens barrel includes a first sound pickup device and a second sound pickup device each of which detects an ultrasound,
    the second lens barrel includes a third sound pickup device and a fourth sound pickup device each of which detects an ultrasound, and
    the temple parts respectively include a fifth sound pickup device and a sixth sound pickup device each of which detects an ultrasound.

2. The display apparatus according to claim 1, further comprising:
    a position estimator that, based on (i) an ultrasound detected by two or more sound pickup devices among the first sound pickup device, the second sound pickup device, the third sound pickup device, the fourth sound pickup device, the fifth sound pickup device, and the sixth sound pickup device, and (ii) a positional relationship between the two or more sound pickup devices, estimates a relative position of a transmitter that emits the ultrasound relative to the two or more sound pickup devices.

3. The display apparatus according to claim 2,

wherein the position estimator:

corrects the positional relationship between the two or more sound pickup devices; and
estimates the relative position of the transmitter relative to the two or more sound pickup devices, based on the ultrasound detected by the two or more sound pickup devices and a corrected positional relationship between the two or more sound pickup devices.

4. The display apparatus according to claim 3,
wherein the position estimator corrects the positional relationship between the two or more sound pickup devices, based on an amount of movement of at least one of the first lens barrel or the second lens barrel in the arrangement direction.

5. The display apparatus according to claim 4, further comprising:

an adjusting member that is connected to the first lens barrel and the second lens barrel, and adjusts a distance between the first lens barrel and the second lens barrel in the arrangement direction by changing at least either (i) relative positions of the adjusting member and the first lens barrel or (ii) relative positions of the adjusting member and the second lens barrel,
wherein the amount of movement is determined based on an amount of adjustment in the distance between the first lens barrel and the second lens barrel in the arrangement direction by the adjusting member.

6. The display apparatus according to claim 3,
wherein the position estimator corrects the positional relationship between the two or more sound pickup devices, based on a relative position of a correction transmitter estimated by detecting a correction ultrasound emitted from the correction transmitter.

7. The display apparatus according to claim 6,

wherein the temple parts respectively include a first imaging device and a second imaging device each of which is provided at an end portion of a corresponding one of the temple parts connected to the support member and captures an image, and
the relative position of the correction transmitter estimated by detecting the correction ultrasound emitted from the correction transmitter is revised according to a position of the correction transmitter that is based on images captured by the first imaging device and the second imaging device, and the positional relationship between the two or more sound pickup devices is corrected based on a revised relative position of the correction transmitter.

8. The display apparatus according to any one of claims 3 to 7,
wherein the position estimator corrects the positional relationship between the two or more sound pickup devices in response to a distance between the first lens barrel and the second lens barrel in the arrangement direction changing from a first distance to a second distance different from the first distance.

EP 4 240 008 A1

# FIG. 1

# FIG. 2

# FIG. 3A

## FIG. 3B

```
Position estimator ⟋81
  ┌──────────────────┐ ⟋82
  │ Movement         │
  │ amount obtainer  │
  └──────────────────┘
        │
        │  ┌──────────────┐ ⟋Mc
        │  │ Sound pickup │
        │  │ device       │
        │  └──────────────┘
        │
        │  ┌──────────────┐ ⟋Cm
        └──│ Imaging      │
           │ device       │
           └──────────────┘
```

FIG. 4

91
Power source

92
Signal processing circuit

75a
Plug
Connector

75

38a
Processor

30
38
Drive circuit

39
Display panel

40

95

# FIG. 5

FIG. 6

FIG. 7

# FIG. 8A

## FIG. 8B

## FIG. 8C

# FIG. 9

# FIG. 10

FIG. 11

EP 4 240 008 A1

## FIG. 12

**Control device** — 200

Storage — 280

Communicator — 270

**CPU** — 290
- Display controller — 2901
- Operation recognizer — 2902
- Position detector — 2903
- Ultrasound controller — 2904

**Right operation terminal** — 300

Storage — 340

Communicator — 350

Operation input receiver — 360

First ultrasound transmitter — 370

Second ultrasound transmitter — 380

Third ultrasound transmitter — 390

**Left operation terminal** — 400

Storage — 440

Communicator — 450

Operation input receiver — 460

Fourth ultrasound transmitter — 470

Fifth ultrasound transmitter — 480

Sixth ultrasound transmitter — 490

**HMD** — 100

**Image display device** — 190

Lens — 1903

Lens — 1903

Display element — 1902

Display element — 1902

Display driver — 1901

**Ultrasound receiver** — 180

First sound pickup device — 1802

Second sound pickup device — 1803

Third sound pickup device — 1804

Fourth sound pickup device — 1805

Fifth sound pickup device — 1806

Sixth sound pickup device — 1807

Pulse outputter — 1801

Communicator — 160

Storage — 150

Operation input receiver — 170

EP 4 240 008 A1

# FIG. 13

FIG. 14

# EP 4 240 008 A1

## INTERNATIONAL SEARCH REPORT

International application No.

**PCT/JP2021/039881**

### A. CLASSIFICATION OF SUBJECT MATTER

*H04N 5/64*(2006.01)i; *G02B 27/02*(2006.01)i
FI: H04N5/64 511A; G02B27/02 Z

According to International Patent Classification (IPC) or to both national classification and IPC

### B. FIELDS SEARCHED

Minimum documentation searched (classification system followed by classification symbols)

H04N5/64; G02B27/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2001-356875 A (TOSHIBA CORP) 26 December 2001 (2001-12-26) paragraphs [0001]-[0003], [0008], [0012], [0074], [0076]-[0077], [0147], [0150], [0187]-[0188], [0190], fig. 1, 26, 28, 43 | 1-2 |
| A | | 3–8 |
| Y | JP 6-315124 A (SONY CORP) 08 November 1994 (1994-11-08) paragraphs [0001], [0006], [0010], [0014]-[0016], fig. 1-3 | 1-2 |

☐ Further documents are listed in the continuation of Box C.　　☑ See patent family annex.

| | |
|---|---|
| *　Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 December 2021** | **11 January 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

43

## INTERNATIONAL SEARCH REPORT
### Information on patent family members

International application No.

**PCT/JP2021/039881**

| Patent document cited in search report | Publication date (day/month/year) | Patent family member(s) | Publication date (day/month/year) |
|---|---|---|---|
| JP 2001-356875 A | 26 December 2001 | (Family: none) | |
| JP 6-315124 A | 08 November 1994 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016090773 A